(19) Europäisches Patentamt
European Patent Office
Office européen des brevets

(11) EP 2 499 104 B1

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(21) Anmeldenummer: **10773059.0**

(22) Anmeldetag: **28.10.2010**

(51) Int Cl.:
***C04B 111/00*** *(2006.01)* ***C04B 111/72*** *(2006.01)*
***C04B 28/02*** *(2006.01)* ***C04B 28/04*** *(2006.01)*
***C04B 28/06*** *(2006.01)*

(86) Internationale Anmeldenummer:
**PCT/EP2010/066393**

(87) Internationale Veröffentlichungsnummer:
**WO 2011/057898 (19.05.2011 Gazette 2011/20)**

(54) **TROCKENMÖRTELMISCHUNG**

DRY MORTAR MIXTURE

MÉLANGE DE MORTIER SEC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2009 EP 09175656**

(43) Veröffentlichungstag der Anmeldung:
**19.09.2012 Patentblatt 2012/38**

(73) Patentinhaber: **BASF Construction Polymers GmbH
83308 Trostberg (DE)**

(72) Erfinder:
- **EBERWEIN, Michael
84547 Emmerting (DE)**
- **LANGLOTZ, Jutta Karin
83308 Trostberg (DE)**
- **FRIEDRICH, Stefan
84518 Garching (DE)**
- **HERTH, Gregor
83308 Trostberg (DE)**
- **TRIEFLINGER, Christian
84508 Burgkirchen (DE)**
- **SCHINABECK, Michael
83352 Altenmarkt (DE)**

(56) Entgegenhaltungen:
**WO-A1-2008/151878 WO-A1-2008/151879
WO-A1-2009/074447 DE-A1- 19 539 250
DE-A1-102005 037 777**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 499 104 B1

**Beschreibung**

Die vorliegende Erfindung betrifft eine Trockenmörtelmischung und deren Verwendung.

In "R. Bayer, H. Lutz, Dry Mortars, Ullmann's Encyclopedia of Industrial Chemistry, 6th ed., vol. 11, Wiley-VCH, Weinheim, (2003), 83-108" wird ein Überblick über die Anwendungen und Zusammensetzung von Trockenmörteln gegeben. Trockenmörtel bestehen aus Bindern, Aggregaten und verschiedenen Zusätzen.

Je nach Zusammensetzung finden Trockenmörtel Anwendung z. B. als Vergussmörtel, Selbstverlaufende Spachtelmassen, Estriche, Fließestriche, Fliesenkleber, Fugenmörtel, Putze, Klebe- und Armierungsmörtel für Wärmedämmverbundsysteme (WDVS) oder Reparaturmörtel. Trockenmörtel können sowohl für Innenraum- als auch für Außenanwendungen eingesetzt werden. Zu den letztgenannten Anwendungen zählen z. B. die bereits genannten Klebe- und Armierungsmörtel für WDVS, Putze und Reparaturmörtel. Derartige Trockenmörtel stehen nach deren Aushärtung im direkten Kontakt mit der Umwelt und sind so direkt dem Klima ausgesetzt. Daher unterliegen derartige Systeme auch einer stärkeren Beanspruchung als Produkte für Innenraumanwendungen. Vor allem Regen und kondensierte Luftfeuchtigkeit können Trockenmörteln im Außenbereich stark zusetzen und so deren Lebensdauer negativ beeinflussen. Der Fachmann greift in diesem Zusammenhang und um diese negativen Auswirkungen abzumildern auf Hydrophobierungsmittel als Zusatz zurück.

Die Anforderungen an moderne Trockenmörtelmischungen, ganz besonders im Bereich von Fliesenklebern und einigen weiteren Anwendungsgebieten, sind bezüglich ihrer Eigenschaften im noch nicht ausgehärteten Zustand (rheologische Verarbeitungseigenschaften wie Abrutschwiderstand und Wasserretention) als auch im ausgehärteten Zustand (Abriebbeständigkeit, Kratzfestigkeit, Biegezugfestigkeit und Haftzugfestigkeiten auf verschiedenen Substraten) sehr hoch. Diese Eigenschaften werden, wie im oben genannten Artikel von "R. Bayer" beschrieben, durch auf dem Gebiet der Trockenmischungen bekannte Zusätze wie Wasserretentionsmittel auf Polysaccharidbasis (zum Beispiel Celluloseether) und redispergierbare Polymerpulver verbessert.

In fließfähigen Trockenmörtelanwendungen werden sogenannten Fließ- oder Dispergiermittel eingesetzt, um die Fließfähigkeit des Mörtels zu verbessern. Durch die Dispergiermittel werden das anorganische Bindemittel und die Füllstoffe dispergiert und so selbst bei niedrigem Wassergehalt eine sehr gute Fließfähigkeit erzielt. In standfesten Trockenmörteln wie Fliesenklebern, Fugenmörteln, Putzen, Klebe- und Armierungsmörteln für Wärmedämmverbundsysteme (WDVS) hat sich der Einsatz von Fließmitteln dagegen bisher nicht durchgesetzt, da die notwendige Standfestigkeit nicht mehr erreicht wird.

Sogenannte "Klebemörtel" sind bspw. aus der deutschen Offenlegungsschrift DE 10 2004 030 121 A1 bekannt. Unter "Klebemörteln" versteht der Fachmann u.a. zementäre Armiermörtel usw., die als Hauptbestandteile anorganische Bindemittel in Form von Zementen sowie Füllstoffe auf Basis von Quarz- und/oder Carbonat-haltigen Rohstoffen enthalten. Die in der genannten Offenlegungsschrift beschriebenen Klebemörtel bestehen aus einem hydraulischen Bindemittel, Zusatzstoffen auf Basis von puzzolanischen und/oder latent hydraulischen Zusätzen, Füllstoffen, einem polymeren Fließmittel, einem redispergierbaren Polymerisatpulver und/oder einer Kunststoffdispersion, einem Wasserretentionsmittel sowie sonstigen Additiven, die ausgewählt werden aus der Gruppe der Beschleuniger, Verzögerer, Verdicker, Farbpigmente, Reduktionsmittel, Luftporenbildner und Verarbeitungshilfsmittel; als Rest ist Wasser angegeben.

Die DE102004030121 A1 beschreibt, dass durch den Einsatz des Dispergiermittels in Fliesenklebern, die für Bodenanwendungen geeignet sind und daher keine großen Anforderungen an die Standfestigkeit des Mörtels stellen, hervorragende Verarbeitungseigenschaften, wie z.B. Aufziehverhalten, Korrigierbarkeiten und klebeoffene Zeit erreicht werden. Darüber hinaus werden auch die physikalischen Eigenschaften des erhärteten Mörtels positiv beeinflusst, insbesondere das Bruchbild und die Haftzugfestigkeiten auf Betonuntergründen. Außerdem werden bei diesen Klebemörteln keine Ausblühungen beobachtet, was insbesondere bei Außenanwendungen von Vorteil ist.

Hydrophobierungsmittel sind im Kapitel 3.2.2 des o. g. Artikels von R. Bayer beschrieben. In diesem Kapitel sind auch die beiden prinzipiellen Möglichkeiten der Hydrophobierung genannt. Diese bestehen im Wesentlichen im Einsatz von Metallsalzen von Fettsäuren, wie z. B. Zinkstearat und Natriumoleat. Alternativ bzw. ergänzend stehen aber auch hydrophob modifizierte redispergierbare Pulver zur Verfügung, wie sie bspw. die hydrophobierten Vinnapas®-Typen der Wacker Chemie AG darstellen.

Ein hydrophobierendes und in Wasser redispergierbares Polymerpulver ist bspw. aus der WO 2006/061139 A1 bekannt. Demgemäß enthält das Polymerpulver ein Polymerisat mit 50 bis 90 Gew.-Teilen Vinylacetatmonomer-Einheiten, 5 bis 50 Gew.-Teilen Vinylestermonomer-Einheiten von Vinylestern $\alpha$-verzweigter Monocarbonsäuren mit 2 bis 20 Kohlenstoffatomen, 1 bis 30 Gew.-Teilen Methacrylsäureester-Monomereinheiten von Alkoholen mit 1 bis 15 Kohlenstoffatomen, bis zu 40 Gew.-Teile Vinylester-Monomereinheiten von langkettigen Monocarbonsäuren mit 10 bis 20 Kohlenstoffatomen, bis zu 20 Gew.-Teile Ethylen-Einheiten sowie ggf. weiteren Hilfsmonomereinheiten.

Oleophob und hydrophob wirkende Mischpolymerisate sind aus der DE 10 2006 028 663 B4 bekannt. Diese Mischpolymerisate können als wässrige Dispersion oder wieder in Form von wasserdispergierbaren Pulvern vorliegen.

Ebenfalls ein hydrophobierendes und in Wasser redispergierbares Additiv auf Basis von Fettsäuren beschreibt DE 103 23 205 A1.

Insbesondere bei den Metallsalzen von Fettsäuren, wie in der DE 10 2006 028 663 beschrieben, führt der Zusatz zum Zweck der Hydrophobierung zu einer schlechteren Benetzung und damit auch zu einer schlechteren Verarbeitbarkeit. Außerdem können die gängigen Hydrophobierungsmittel ausgewaschen werden, wodurch der Hydrophobierungseffekt längerfristig dramatisch nachlässt. Außerdem ist dem Fachmann bekannt, dass hocheffektive Hydrophobierungsmittel, wie reines Natriumoleat, vor allem in Fassadenanwendungen im Außenbereich zur Rissbildung neigen. Aus diesem Grund werden derartige Hydrophobierungsmittel als Mischungen mit Metallsalz-Stearaten kombiniert.

Insbesondere sind durch Zusätze wie redispergierbare Polymerpulver und/oder Celluloseether polymervergütete zementäre Trockenmischungen gebräuchlich, allerdings sind diese Zusätze, insbesondere die redispergierbaren Polymerpulver aufgrund der teils hohen Dosierung (bis zu 6 Gew.-%) sehr kostenintensiv.

Der Einsatz hydrophob modifizierter redispergierbarer Pulver hat sich in der Praxis aufgrund der erhöhten Kosten deshalb kaum durchgesetzt. Hinzu kommt, dass wichtige Eigenschaften, die durch das Dispersionspulver in die bauchemische Mischung eingeführt werden, wie z. B. Festigkeit und Haftzugwerte, mit anderen Eigenschaften, wie bspw. der Hydrophobie, zwangsweise gekoppelt werden, wodurch dem Formulierer wichtige Freiheitsgrade genommen werden. Aufgrund der teilweise stark hydrophobierenden Eigenschaften muss das Dispersionspulver im Vergleich zu einer nicht hydrophobierten Variante höher dosiert werden, um so den benötigten Haftverbund zum Untergrund zu gewährleisten. Dies kommt insbesondere bei der Verarbeitung Polystyrolbasierter Dämmmaterialien vom Typ EPS und XPS bzgl. der Haftungseigenschaften zum Tragen.

Der Einsatz von Superabsorbierenden Polymeren in Baustoffmischungen ist ebenfalls bekannt. Zum Beispiel wird in der US-A-2003144386 der Einsatz von Superabsorbern in zementären Baustoffmischungen zur Verbesserung der Festigkeitsentwicklung beschrieben. Die Wasseraufnahmekapazität bzw. Wasserrückhaltekapazität der in dieser Schrift offenbarten Superabsorber in calciumhaltigen Systemen, zum Beispiel in zementösen Systemen ist allerdings relativ gering.

Die Offenlegungsschrift DE 102 02 039 A1 beschreibt Mischungen aus festen, feinteiligen und Hydrogel formenden Polymeren sowie hydraulisch abbindenden Baustoffen. Die Polymere besitzen einen Anteil von nicht mehr als 2 Gew.-% an Partikeln mit einer Teilchengröße von mehr als 200 $\mu$m. Die Polymere enthalten vorzugsweise monoethylenisch ungesättigte $C_3$-$C_{25}$-Carbonsäuren oder deren Anhydride als Monomere. Nachteilig bei derartigen polymeren Superabsorbern ist deren Eigenschaft, in zementären Systemen zu kollabieren, da sie im Wesentlichen aus reiner Acrylsäure aufgebaut sind.

Bei Superabsorbierenden Polymeren (SAP) handelt es sich üblicherweise um in Wasser oder wässrigen Salzlösungen quellbare pulverförmige Copolymere. SAP sind insbesondere vernetzte hochmolekulare entweder anionische oder kationische Polyelektrolyte, welche durch radikalische Polymerisation geeigneter ethylenisch ungesättigter Vinylverbindungen und eine anschließende Trocknung der so erhaltenen Copolymere zugänglich sind. Bei Kontakt mit Wasser oder wässrigen Systemen bilden sich unter Quellen und Wasseraufnahme Hydrogele aus, wobei ein Vielfaches des Gewichts des pulverförmigen Copolymers an Wasser aufgenommen werden kann. Unter "Hydrogelen" versteht man somit Wasser enthaltende Gele auf der Basis hydrophiler aber vernetzter wasserunlöslicher Polymere, die als dreidimensionale Netzwerke vorliegen.

Der Einsatz von Superabsorbern speziell in Trockenmörteln ist bekannt. So sind bspw. in der DE 10 2007 027 470 A1 Trockenmörtelmischungen auf Basis von Zement oder Gips als hydraulische Bindemittel beschrieben, die SAP enthalten. Die dort offenbarten Trockenmörtelformulierungen müssen allerdings zwingend hohe Mengen an Calciumformiat als Beschleuniger für die Zementhydratation und das Aushärteverhalten enthalten. Aus diesem Grund können auch nur bestimmte SAP verwendet werden, die besonders viel des relativ teuren Monomeren 2-Acrylamido-2-methylpropansulfonsäure (AMPS) enthalten.

Die aus dem genannten Stand der Technik bekannten Technologien sind bezüglich ihrer Wirtschaftlichkeit noch verbesserungswürdig, insbesondere bezüglich ihrer Ergiebigkeit. Die gewünschten Trockenmischungen sollen aber vor allem gute Produkteigenschaften insbesondere im frischen, aber auch im erhärteten Zustand aufweisen.

Vorteilhafte Produkteigenschaften sind vor allem bei noch nicht ausgehärteten Mörtelmischungen gewünscht, die eine gewisse Standfestigkeit aufweisen müssen, was insbesondere bei vertikal ausgerichteten Anwendungsgebieten zum Tragen kommt.

Klebemörteln werden vielfach Wasserretentionsmittel in Form von Celluloseethern zugegeben, um so die Verarbeitungseigenschaften zu optimieren. Außerdem verleihen derartigen Abmischungen redispergierbare Polymerisatpulver oder flüssige Polymerdispersionen im Falle von zweikomponentigen Mörtelsystemen eine gewisse Flexibilität, wodurch sich diese sogenannten "Flexmörtel" insbesondere für das Aufbringen auf Untergründe eignen, die anschließend mit starren Keramik- und/oder Naturwerksteinplatten belegt werden. Insbesondere im Zusammenhang mit der letztgenannten Anwendung auf horizontalen Untergründen wird besonderer Wert auf die Verbundfestigkeit und insbesondere die Nasshaftzugfestigkeit gelegt. Solche Fliesenkleber werden als Dünnbett- oder Mittelbettmörtel ausgebracht. Sie müssen zu diesem Zweck eine gute Fliessfähigkeit aufweisen und umfassen somit keine oder nur geringe Anteile an Verdickern.

Der technologische Hintergrund wird zusätzlich durch die folgenden Dokumente beschrieben:

WO 2008/151878 A1 betrifft polymervergütete zementäre Baustofftrockenmischungen, die ein redispergierbares Polymerpulver, auf Polysaccharidstrukturen basierende Wasserretentionsmittel, einen calciumhaltigen Abbindebeschleuniger und ein superabsorbierendes Copolymer enthalten. Dispergiermittel sind nicht enthalten. Bei den redispergierbaren Polymerpulvern handelt es sich um Polymere, die als wasserbasierte Dispersion durch einschlägige Polymerisationsverfahren erhältlich sind und durch nachgeschaltete Trocknungsverfahren in ein Polymerpulver überführt werden. Erst beim Einmischen in Wasser oder wässrige Systeme entsteht aus dem redispergierbaren Polymerpulver wieder eine wasserbasierte Dispersion.

WO 2008/151879 A1 hat auf Calciumsulfat basierende Baustofftrockenmischungen zum Inhalt, die ein redispergierbares Polymerpulver, auf Polysaccharidstrukturen basierende Wasserretentionsmittel, Abbindeverzögerer und ein superabsorbierendes Copolymer enthalten. Die redispergierbaren und filmbildenden Polymerpulver besitzen selbst keine dispergierenden Eigenschaften. Wie nachfolgend noch detailliert beschrieben, bestehen zwischen Hydrophobierungsmitteln und Dispersionspulvern, die auf hydrophoben Monomeren basieren, deutliche Unterschiede.

WO 2009/074447 A1 befasst sich mit einem Copolymer auf Basis einer sulfonsäurehaltigen Verbindung und dessen Verwendung in zementären Systemen, die auch Gipsbasiert sein können, u.a. als Wasserretentionsmitteln im Ölfeldbereich. Die beschriebenen Verbindungen weisen allerdings leine superabsorbierenden Eigenschaften auf, sondern stellen anvernetzte Lösungspolymere dar.

Aus der DE 195 39 250 A1 ist ein Abbindezusatzmiftel für Zementzubereitungen und insbesondere Beton bekannt, welches ein wasserlösliches Polyethylenoxid und ein superabsorbierendes Material enthält. Das Auftragen der Zementzubereitung erfolgt schichtweise, wie es vor allem bei Spritzbetonen der Fall ist, die sich deutlich von Trockenmörtelmischungen und deren Anwendungen unterscheiden. Ziel soll die Verringerung der Rissbildung und des Schrumpfens der Zubereitung sein, wobei das beschriebene Zusatzmittel insbesondere die Haftung zwischen den aufgetragenen Schichten verbessern soll.

Die DE 10 2005 037777 A1 schließlich beschreibt ein Additiv mit zeitlich verzögert einsetzender Wirkung und u. a. die Kombination von größeren Mengen an Dispergiermitteln mit Verbindungen mit superabsorbierenden Eigenschaften. Diese Kombination soll eine bessere Einbringbarkeit in bauchemische Systeme, Dispersionen und Farbzubereitungen ermöglichen.

Für die vorliegende Erfindung hat sich somit die Aufgabe gestellt, neue Trockenmörtelmischungen auf Basis mindestens eines hydraulischen und/oder latent hydraulischen Bindemittels zur Verfügung zu stellen, die unter wirtschaftlichen Gesichtspunkten günstig herzustellen sind und die insbesondere im vertikalen Anwendungsbereich verarbeitungstechnische und qualitative Vorteile aufweisen.

Die Anforderungen an moderne Trockenmörtelmischungen, ganz besonders im Bereich von Fliesenklebern und einigen weiteren Anwendungsgebieten, sind bezüglich ihrer Eigenschaften im noch nicht ausgehärteten Zustand (rheologische Verarbeitungseigenschaften wie Abrutschwiderstand und Wasserretention) als auch im ausgehärteten Zustand (Abriebbeständigkeit, Kratzfestigkeit, Biegezugfestigkeit und Haftzugfestigkeiten auf verschiedenen Substraten) sehr hoch. Diese Eigenschaften werden wie in "R. Bayer, H. Lutz, Dry Mortars, Ullmann's Encyclopedia of Industrial Chemistry, 6th ed., vol. 11, Wiley-VCH, Weinheim, (2003), 83-108" beschrieben, durch auf dem Gebiet der Trockenmischungen bekannte Zusätze wie Wasserretentionsmittel auf Polysaccharidbasis (zum Beispiel Celluloseether) und redispergierbare Polymerpulver verbessert. Allerdings sind die genannten Zusätze, besonders die Dispersionspulver, im Vergleich zu den anderen Trockenmischungskomponenten sehr kostenintensiv. Die Ergiebigkeit von Trockenmischungen, welche definiert ist als der Quotient aus belegter Fläche und der ausgebrachten Masse des Trockenmörtels, ist aus wirtschaftlichen Gründen aber auch aufgrund weiterer Vorteile für den Anwender (z.B. muss weniger Trockenmörtel vorgehalten werden) verbesserungswürdig. Auch besteht die Notwendigkeit, die Abbindegeschwindigkeit, bzw. die Entwicklung der (Früh)festigkeit der Trockenmörtel zu beschleunigen. Dies erfolgt vorteilhafter Weise, unter anderem aufgrund seiner guten Wirksamkeit, durch die Verwendung von Calciumformiat oder auch anderer Calciumsalze. Andere bekannte Abbindebeschleuniger wie zum Beispiel Alkanolamine würden besonders bei der Anwendung im Innenraumbereich den Nachteil einer unangenehmen Geruchsentwicklung aufweisen, bzw. könnten auch gesundheitlich bedenklich sein.

Als technische Aufgabe leitet sich hieraus ab, durch geeignete Maßnahmen vor allem die Standfestigkeit der Trockenmörtel zu steigern, ohne eine Qualitätsminderung der Baustoffprodukte hinnehmen zu müssen und insbesondere im Anwendungsgebiet der WDVS eine ausreichende Hydrophobierung und Rißbeständigkeit zu erzielen.

Ein weiter Aspekt der Aufgabenstellung ist in der Übertragung der Vorteile von Fliesenklebern oder Flexmörteln, deren Anwendung auf horizontale Flächen beschränkt ist, auf standfeste Systeme im vertikalen Bereich zu übertragen,

ohne dass dabei die Mörtelsysteme insbesondere im ausgehärteten Zustand Nachteile erleiden.

Die Lösung dieser Aufgabe erfolgt durch die Verwendung der erfindungsgemäßen Trockenmörtelmischung, welche ein zur Steigerung der Toleranz gegenüber erhöhten W/Z-Werten geeignetes, superabsorbierendes, meist pulverförmiges Copolymer (Superabsorber) enthalten. Die Polymerchemie des Superabsorbers wurde dabei erfindungsgemäß so angepasst, dass eine ausreichend hohe Wasseraufnahmekapazität in wässrigen Systemen gewährleistet ist, wie zum Beispiel in den erfindungsgemäßen hydraulisch bzw. latent-hydraulisch abbindenden Systemen, welche noch zusätzlich ein Dispergiermittel enthalten.

Die erfindungsgemäße Trockenmörtelmischung auf Basis mind. eines hydraulischen und/oder latent-hydraulischen Bindemittels weist im angemachten und nicht ausgehärteten Zustand standfeste Eigenschaften auf, die gemäß DIN EN1308 mit einem Hägermann-Ausbreitmass <18 cm und dieses bestimmt nach DIN EN1015 ermittelt werden. Gekennzeichnet ist diese Trockenmörtelmischung dadurch, dass sie mind. einen Vertreter eines Dispergiermittels (a) ausgewählt aus der Reihe Verbindung mind. enthaltend ein verzweigtes Kammpolymer mit Polyether-Seitenketten, Naphthalinsulfonat-Formaldehyd-Kondensat ("BNS") und Melaminsulfonat-Formaldehyd-Kondensat ("MFS") in einer Menge von 0,01 bis 5,0 Gew.-%, bezogen auf die Gesamtzusammensetzung der Trockenmörtelmischung enthält, wobei sämtliche Vertreter einzeln aber auch in geeigneten Mischungen in der vorgeschlagenen Trockenmörtelmischung vertreten sein können, und mind. eine Verbindung mit superabsorbierenden Eigenschaften (b), die einen Anteil an der Monomerkomponente 2-Acrylamido-2-methylpropansulfonsäure ("AMPS") von 0 bis 50 Mol-% aufweist, und/oder bei der es sich um ein Superabsorbierendes Polymer ("SAP") mit anionischen und/oder kationischen Eigenschaften handelt.

Überraschenderweise wurde gefunden, dass dabei nicht nur die vorstehend genannten Anforderungen an die Produkteigenschaften selbst im vertikalen Verarbeitungsbereich eingehalten oder verbessert werden können, sondern dass darüber hinaus auch eine äußerst geringe Wasseraufnahme zu beobachten ist und auch die sonst häufig nachlassende Wirkung der hydrophoben Eigenschaften nicht auftritt. Außerdem konnte die Flexibilität der ausgehärteten Trockenmörtelmischungen gesteigert und deren Rissbildung signifikant verringert werden. Ein weiterer Vorteil besteht darin, dass über den Einsatz des Dispergiermittels in Kombination mit einem Superabsorber auch die Dosierung an Verdickern reduziert und auch die Menge an Dispersionspulvern deutlich verringert werden kann. Dies ist insbesondere überraschend, da der Einsatz von Dispergiermitteln im horizontalen Anwendungsbereich der Standfestigkeit derartiger Trockenmörtelsysteme eigentlich zuwider läuft und die verarbeitungstechnischen Eigenschaften üblicherweise verschlechtern. Die Gesamtheit der beschriebenen überraschenden Effekte und Vorteile geht offensichtlich auf die Kombination von Dispergiermitteln mit Superabsorbern einher und tritt überraschenderweise in standfesten Trockenmörtelmischungen auf, die ein Ausbreitmass <18 cm aufweisen. Dispergiermittelhaltige Fliesenkleber für die Anwendung im horizontalen Bereich, wie sie insbesondere zum Verlegen von Fliesen oder Natursteinplatten eingesetzt werden, weisen üblicherweise ein Ausbreitmaß >20 cm auf, wobei dieses Ausbreitmass wiederum gem. DIN EN1015-3 bestimmt wird.

Zur Begriffsbestimmung soll hervorgehoben werden, dass Trockenmörtelmischungen häufig in der Literatur auch als Trockenmischungen oder Trockenmörtel bezeichnet werden.

Detaillierte Beschreibung der Erfindung

a) Die Trockenmörtelmischung gem. vorliegender Erfindung kann als weitere Komponente c) ein Hydrophobierungsmittel enthalten. Dieses sollte vorzugsweise in einer Menge von 0,1 bis 0,6 Gew.-%, besonders bevorzugt in einer Menge von 0,2 bis 0,4 Gew.-% und insbesondere in einer Menge von 0,2 bis 0,3 Gew.-%, jeweils bezogen auf die Gesamtzusammensetzung der Trockenmörtelmischung, enthalten sein.
Als Hydrophobierungsmittel sind generell Metallsalze von Fettsäuren geeignet, die in großen Mengen preiswert zur Verfügung stehen. Sie werden üblicherweise als Rezepturbestandteile bei der Trockenmörtelherstellung zugesetzt. Durch den Zusatz von Hydrophobierungsmitteln wird das Eindringen von Wasser in den ausgehärteten Trockenmörtel verringert oder gänzlich verhindert. Die Lebensdauer verlängert sich dadurch, da eindringende Feuchtigkeit insbesondere durch Gefrieren zu Schäden bspw. in Form von Abplatzungen führt. Geeignete Hydrophobierungsmittel gem. vorliegender Erfindung sind Fettsäurederivate, insbesondere $C_{1-14}$-Alkylester und - Alkylarylester der Laurinsäure und/oder der Ölsäure, Mono- und/oder Diglykolester der Laurin- und/oder der Ölsäure, Mono-, Di- und Trifettsäureester des Glyzerins mit Laurin- und/oder Ölsäure, Metallsalze von Fettsäuren und besonders bevorzugt Zinkstearat und/oder Natriumoleat, die auch als Mischung zugesetzt werden können. Ebenfalls in Frage kommen die aus dem Stand der Technik gut bekannten hydrophob modifizierten redispergierbaren Pulver. Diese können bspw. auf Basis von Vinylacetat-Monomereinheiten, Vinylester-Monomereinheiten und/oder Methacrylsäureester-Monomereinheiten aufbauen. Bevorzugte Methacrylsäureester-Monomereinheiten sind Acrylsäureester von unverzweigten oder verzweigten Alkoholen mit 1 bis 15 Kohlenstoffatomen, besonders bevorzugt sind dabei Acrylsäureester von unverzweigten oder verzweigten Alkoholen mit 1 bis 8 Kohlenstoffatomen. Insbesondere geeignet sind Methylacrylat, n-Ethylacrylat, t-Butylacrylat und 2-Ethylhexylacrylat. Als bevorzugte Vinylester-Monomereinheiten gelten langkettige unverzweigte Monocarbonsäuren mit 10 bis 20 Kohlenstoffatomen, die sich insbesondere von Vinyllaurat ableiten. Schließlich sind erfindungsgemäß Vinylester von $\alpha$-verzweigten Monocarbonsäuren mit 2 bis 20 Kohlenstoffatomen als bevorzugt anzusehen. Insbesondere genannt seien an dieser Stelle Vinylpivalat und

Versaticsäure-Vinylester von $\alpha$-verzweigten Monocarbonsäuren mit 9 bis 15 Kohlenstoffatomen.

b) Das zementäre hydraulische Bindemittel unterliegt bezüglich der Art des Zements keinen besonderen Beschränkungen. Es können Portlandzemente, insbesondere ausgewählt aus der Gruppe CEM I, II, III, IV und V und/oder Tonerdezemente (Aluminatzemente) zur Verwendung kommen. Weißzement ist besonders in den Fällen geeignet, in denen eine entsprechende Farbgebung der Produkte eine Rolle spielt. Die genannten Zemente können einzeln oder als Mischungen eingesetzt werden. Der Gewichtsanteil des zementären hydraulischen Bindemittels in der Trockenmörtelmischung beträgt je nach Anwendung von 3 bis 50 Gew. %, bevorzugt ist ein Gewichtsanteil von 5 bis 40 Gew. %, besonders bevorzugt von 10 bis 30 Gew. %. Zudem wird oftmals als zusätzliches nicht-hydraulisches Bindemittel $Ca(OH)_2$ (Kalkhydrat) zugegeben, welches über das in der Umgebungsluft enthaltene Kohlendioxid abbindet. Der Gewichtsanteil an Kalkhydrat beträgt je nach Anwendung 1 bis 15 Gew. %, bevorzugt ist ein Gewichtsanteil von 2 bis 10 Gew. %. In einer weiteren Ausführungsform können alternativ oder zusätzlich zu den genannten Zementen auch puzzolanische und/oder latent hydraulische Bindemittel in der Trockenmörtelmischung enthalten sein. Bei den puzzolanisch und/oder latent hydraulischen Zusätzen werden vorzugsweise Flugasche, Mikrosilika, Metakaolin, Trassmehl, Alumosilikat, Tuff, Phonolith, Diatomeenerde, amorph gefälltes Silica, Ölschiefer sowie Hochofenschlacke mit hauptsächlich nicht kristallinen Anteilen eingesetzt. Ihr Anteil in der Trockenmörtelmischung beträgt vorzugsweise von 5 bis 50 Gew. %, bezogen auf die Gesamtzusammensetzung der Trockenmörtelmischung.

c) Als weitere Komponente kann die erfindungsgemäße Trockenmörtelmischung Aggregate enthalten, bei denen es sich vorzugsweise um Zuschlagstoffe mit einer durchschnittlichen Korngröße bis 5 mm, vorzugsweise zwischen 0,5 und 3 mm und besonders bevorzugt zwischen 1,0 und 2,0 mm handelt. Deren Anteil sollte gemäß vorliegender Erfindung vorzugsweise zwischen 5 und 85 Gew.-%, bezogen auf die Gesamtzusammensetzung der Trockenmörtelmischung betragen.
Die genannten Aggregate oder auch Füllstoffe der erfindungsgemässen Trockenmörtelmischung sind in den wässrigen Systemen nur in geringem Maße löslich, bzw. quellbar. Sie wirken insbesondere nicht als ein Bindemittel.
Als anorganische Füllstoffe geeignete Aggregate sind zum Beispiel Quarzsand, Kalksteinmehl, Kreide, Marmor, Ton, Mergel, Aluminiumoxid, Talkum und/oder Schwerspat, wobei silikatische Sande, silikatische Mehle, Carbonate in Form von Kalksteinmehlen, Kalksteinbrechsanden, Kreide, Dolomit, Magnesit und Mischungen daraus bevorzugt sind. Die anorganischen Füllstoffe können bevorzugt auch als Leichtfüllstoffe wie Mikrohohlkugeln aus Glas, wie Blähglas und als Alumosilikate, wie Perlithe und Blähton vorliegen. Leichtfüllstoffe auf natürlicher Basis wie zum Beispiel Mineralschaum, Bims, Schaumlava und/oder Bläh-Vermiculit sind ebenfalls bevorzugt. Erfindungsgemäße organische Füllstoffe sind beispielsweise geschredderte Plastikabfälle, wie zum Beispiel aus Polyvinylchlorid, Polystyrol, Polyethylen, Polypropylen oder Melaminharzen. Gummipartikel und/oder Polystyrol-Kugeln stellen bevorzugte erfindungsgemäße organische Füllstoffe dar.

d) Die vorliegende Erfindung sieht bzgl. der Dispergiermittelkomponente (a) und der Verbindung mit superabsorbierenden Eigenschaften (b) ein Mengenverhältnis vor, welches in der Kombination (a) + (b) 1 : 0,5 bis 5 beträgt.

Ferner wird von der vorliegenden Erfindung ein Mengenverhältnis der Komponenten (a) : (b) : (c) umfasst, welches in der Kombination (a) + (b) + (c) 1 : 0,5 bis 5 : 2 bis 6 beträgt.

Ein weiterer Aspekt der vorliegenden Erfindung besteht darin, dass die Kombination der Komponenten (a) + (c), also des Dispergiermittels plus des Hydrophobierungsmittels, in Anteilen von 0,20 bis 0,8 Gew.-%, bevorzugt von 0,25 bis 0,45 Gew.-% und besonders bevorzugt von 0,25 bis 0,35 Gew.-% beträgt. Die genannten Mengenanteile beziehen sich jeweils auf die Gesamtzusammensetzung der Trockenmörtelmischung.

Hinsichtlich der Kombination der Komponenten (b) + (c), also der Verbindung mit superabsorbierenden Eigenschaften mit dem Hydrophobierungsmittel, sieht die vorliegende Erfindung bevorzugte Anteile von 0,3 bis 1,0 Gew.-%, besonders bevorzugt von 0,3 bis 0,8 Gew.-% und insbesondere von 0,35 bis 0,6 Gew.-% vor. Auch diese genannten Anteile beziehen sich jeweils auf die Gesamtzusammensetzung der Trockenmörtelmischung.

Schließlich sieht die vorliegende Erfindung noch hinsichtlich der Kombination der Komponenten (a) + (b) + (c) Anteile vor, die von 0,4 bis 1,0 Gew.-%, bevorzugt von 0,4 bis 0,8 Gew.-% und besonders bevorzugt von 0,5 bis 0,7 Gew.-% reichen. Die genannten Anteile beziehen sich wiederum auf die Gesamtzusammensetzung der Trockenmörtelmischung.

Ein erfindungswesentliches Merkmal ist im Dispergiermittel (a) zu sehen. Geeignete Vertreter werden gemäß vorliegender Erfindung ausgewählt aus der Reihe der Verbindungen, die mind. ein verzweigtes Kammpolymer mit Polyetherseitenketten enthalten; in Frage kommen aber auch Naphthalinsulfonat-Formaldehydkondensate ("BNS") und Melaminsulfonat-Formaldehydkondensate ("MFS").

Geeignete verzweigte Kammpolymere mit Polyetherseitenketten sind bspw. in der WO 2006/133933 A2 vorbeschrieben.

Diese Copolymere bestehen aus zwei Monomer-Komponenten, wobei die erste Monomer-Komponente ein olefinisch ungesättigtes Monocarbonsäure-Comonomer oder einen Ester oder ein Salz davon darstellt und/oder ein olefinisch ungesättigtes Schwefelsäure-Comonomer oder ein Salz davon, und die zweite Monomer-Komponente ein Comonomer der allgemeinen Formel (I)

(I)

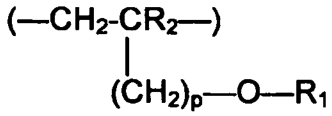

worin $R_1$ für

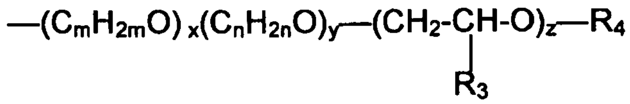

steht und $R_2$ für H oder einen aliphatischen Kohlenwasserstoffrest mit 1 bis 5 C-Atomen; $R_3$ = unsubstituierter oder substituierter Arylrest und bevorzugt Phenyl, und $R_4$ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe

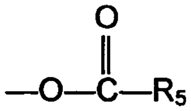 , 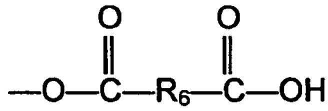 , 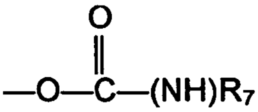

wobei $R_5$ und $R_7$ jeweils für einen Alkyl-, Aryl-, Aralkyl-, oder Alkaryl-Rest und $R_6$ für einen Alkyliden-, Aryliden-, Aralkyliden- oder Alkaryliden-Rest stehen, und
p = 0, 1, 2, 3 oder 4
m, n bedeuten unabhängig voneinander 2, 3, 4 oder 5
x und y bedeuten unabhängig voneinander eine ganze Zahl $\leq$ 350 und
z = 0 bis 200

Der Inhalt von WO 2006/133933 A2 ist bezüglich der dort beschriebenen Copolymere substantieller Bestandteil der vorliegenden Offenbarung.

Insbesondere umfasst die vorliegende Erfindung eine Formulierung, in der das Copolymer die Comonomer-Komponente 1) in Anteilen von 30 bis 99 Mol-% und die Comonomer-Komponente 2) in Anteilen von 70 bis 1 Mol-% enthält. Als besonders vorteilhaft hat sich in diesem Zusammenhang ein Copolymer erwiesen, welches die Comonomer-Komponente 1) in Anteilen von 40 bis 90 Mol-% und die Comonomer-Komponente 2) in Anteilen von 60 bis 10 Mol-% enthält.

Bei der Comonomer-Komponente 1) kann es sich vorzugsweise um eine Acrylsäure oder ein Salz davon handeln und bei der Comonomer-Komponente 2) im Falle p = 0 oder 1 um eine Variante, die eine Vinyl- oder Allylgruppe und als Rest $R_1$ einen Polyether enthält.

Weiterhin ist es im Rahmen der vorliegenden Erfindung als vorteilhaft anzusehen, wenn die Comonomer-Komponente 1) aus der Reihe Acrylsäure, Methacrylsäure, Crotonsäure, Isocrotonsäure, Allylsulfonsäure, Vinylsulfonsäure und deren geeignete Salze sowie deren Alkyl- oder Hydroxyalkylester stammt.

Außerdem kann das Copolymer zusätzliche Baugruppen in copolymerisierter Form aufweisen, was von der vorliegenden Erfindung ebenfalls berücksichtigt wird. In diesem Fall sollte es sich bei den zusätzlichen Baugruppen um Styrole, Acrylamide und/oder um hydrophobe Verbindungen handeln, wobei Esterstruktureinheiten, Polypropylenoxid- und Polypropylenoxid/Polyethylenoxid-Einheiten besonders bevorzugt sind. Das Copolymer a) sollte die genannten zusätzlichen Baugruppen in Anteilen bis 5 Mol-%, bevorzugt von 0,05 bis 3,0 Mol-% und insbesondere von 0,1 bis 1,0 Mol-% enthalten.

Außerdem ist es vorteilhaft, wenn die Formel (I) für einen Allyl- oder Vinylgruppenhaltigen Polyether steht.

Sulfonsäuregruppen-haltige s-Triazine oder Naphthalin-Formaldehydkondensationsprodukte sind aus dem Stand der Technik ebenfalls hinlänglich bekannt und werden häufig als Fließmittel für Zement-basierte Systeme, wie z.

B. Beton, eingesetzt. Sulfonierte β-Naphthalin-Formaldehydkondensationsprodukte ("BNS"), die auch als Naphthalin-Formaldehydsulfonate ("NFS") bezeichnet werden, sind in der Lage, Zementpartikel durch eine elektrostatische Abstoßung zu dispergieren.

BNS oder NFS sind insbesondere dazu geeignet, um Zementpartikeln eine hohe Dispersionsfähigkeit zu verleihen, wobei die Schaumbildung unterdrückt und die Wasserretention gesteigert wird. Durch diese Effekte ist es möglich, hydraulische Bindemittel, wie bspw. Zemente, einzusparen und die Verarbeitbarkeit zu verbessern.

Die BNS-Vertreter werden üblicherweise durch Kondensationsreaktionen aromatischer Sulfonsäuren, wie Naphthalinsulfonsäuren, mit Formaldehyd unter Normaldruck und bei Temperaturen bis zu 100 °C erhalten. Die Herstellung von BNS-Verbindungen ist gut bekannt und wird bspw. in EP 0 214 412 A1 und DE-PS 2 007 603 beschrieben.

BNS-Kondensationsprodukte werden der Trockenmörtelmischung üblicherweise in Mengen von 0,01 bis 6,0 Gew.-%, bezogen auf die Bindemittel-Komponente, zugesetzt.

Sulfonierte Melamin-Formaldehydkondensationsprodukte ("MFS") sind ebenfalls bestens als Fließmittel in hydraulische Bindemittel enthaltenden Zusammensetzungen, wie bspw. Trockenmörtelmischungen, bekannt.

Melamin stellt in diesem Zusammenhang den Vertreter der s-Triazine dar. MFS-Harze sind in der Lage, bauchemischen Massen eine gute Fliessfähigkeit zu verleihen, wobei Mengen zwischen 0,3 und 1,2 Gew.-%, bezogen auf die Bindemittelkomponente als bevorzugt anzusehen sind.

Im Zusammenhang mit MFS-Verbindungen wird als Stand der Technik auf DE 196 09 614 A1, DE 44 11 791 A1, EP 0 059 353 A1 und DE 195 38 821 A1 verwiesen.

Ein weiterer geeigneter Vertreter der Dispergiermittelkomponente (a) gemäß vorliegender Erfindung ist in einem Polykondensationsprodukt zu sehen, enthaltend (I) mind. eine einen Aromaten oder Heteroaromaten und eine Polyetherseitenkette aufweisende Struktureinheit und (II) mind. eine phosphatierte, einen Aromaten oder Heteroaromaten aufweisende Struktureinheit und (III) mind. eine einen Aromaten oder Heteroaromaten aufweisende Struktureinheit, wobei sich die Struktureinheit (II) und Struktureinheit (III) ausschließlich dadurch unterscheiden, dass die $OP(OH)_2$-Gruppe der Struktureinheit (11) in Struktureinheit (III) durch H ersetzt ist und Struktureinheit (III) ungleich Struktureinheit (I) ist.

Sämtliche genannten Dispergiermittelvertreter können einzeln, aber auch in geeigneten Mischungen in der vorgeschlagenen Trockenmörtelmischung gemäß Erfindung vertreten sein.

e) Wie bereits dargelegt, stellen die als SAP bekannten und mit Wasser oder wässrigen Salzlösungen quellbaren pulverförmigen Copolymere vernetzte, hochmolekulare, entweder anionische oder kationische Polyelektrolyte dar, welche durch radikalische Polymerisation geeigneter, ethylenisch ungesättigter Vinylverbindungen und anschließende Trocknungsmaßnahmen der erhaltenen Copolymere erhältlich sind. In der Technik spricht man üblicherweise auch einfach von Superabsorbern. Bei Kontakt mit Wasser oder wässrigen Systemen bildet sich unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber vernetzter wasserunlöslicher Polymere, die als dreidimensionale Netzwerke vorliegen. Das aus dem pulverförmigen, superabsorbierenden Copolymer durch Wasseraufnahme gebildete Hydrogel soll möglichst wenig in Wasser lösliche Anteile aufweisen, um die Rheologieeigenschaften der Baustoffmischungen nicht negativ zu beeinflussen. In vorliegender Erfindung ist es vorteilhaft, solche Superabsorber zu verwenden, die auch bei hohen Salzkonzentrationen, insbesondere hohen Calciumionenkonzentrationen wie sie üblicher Weise in zementösen wässrigen Systemen vorliegen, ein hohes Wasserabsorptionsvermögen aufweisen.

Wie ebenfalls bereits erwähnt, liegen die erfindungsgemäßen pulverförmigen Copolymere (Superabsorber) bevorzugt entweder als anionische oder kationische Polyelektrolyte und im Wesentlichen nicht als Polyampholyte vor. Unter Polyampholyten versteht man Polyelektrolyte, die sowohl kationische als auch anionische Ladungen an der Polymerkette tragen. Am meisten bevorzugt sind also Copolymere rein anionischer oder kationischer Natur. Allerdings können bis zu 10 Prozent, bevorzugt weniger als 5 Prozent der Gesamtladung eines Polyelektrolyten, durch entgegengesetzte Ladungsanteile ersetzt werden. Dies gilt sowohl für den Fall überwiegend anionischer Copolymere mit einem relativ kleinen kationischen Anteil, als auch umgekehrt für überwiegend kationische Copolymere mit einem relativ kleinen anionischen Anteil.

Zunächst sollen die anionischen superabsorbierenden Copolymere beschrieben werden:

Als anionische Struktureinheiten sind Sulfonsäuregruppen-haltige Struktureinheiten gemäß der allgemeinen Formel (II) enthalten:

(II)

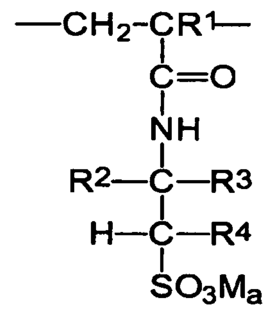

worin

- $R^1$ gleich oder verschieden ist und durch Wasserstoff und/oder einen Methylrest repräsentiert wird,
- $R^2$, $R^3$, $R^4$ jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,
- M gleich oder verschieden ist und durch Wasserstoff, ein ein- oder zweiwertiges Metallkation und/oder ein Ammoniumion repräsentiert wird,
- a gleich oder verschieden ist und durch 1/2 und/oder 1 repräsentiert wird.

Sulfonsäuregruppenhaltige Monomere sind gegenüber carbonsäuregruppenhaltigen Monomeren bevorzugt, da sie in wässrigen Salzlösungen, besonders bei Anwesenheit von Calciumionen stabilere Hydrogele bilden, welche mehr Wasser aufnehmen können. Insbesondere sind die Sulfonsäuregruppen-haltigen Superabsorber den hauptsächlich carbonsäuregruppenhaltigen Superabsorbern, wie solchen auf der Basis von vernetzter hochmolekularer Polyacrylsäure, bezüglich dieser Eigenschaft überlegen. Bevorzugt geht die der allgemeinen Formel (II) entsprechende Sulfonsäuregruppenhaltige Struktureinheit aus der Copolymerisation von einer oder mehreren der Monomerspezies 2-Acrylamido-2-methylpropansulfonsäure, 2-Methacrylamido-2-methylpropansulfonsäure, 2-Acrylamidobutansulfonsäure, und/oder 2-Acrylamido-2,4,4-trimethylpentansulfonsäure, bzw. jeweils den Salzen der genannten Säuren hervor. Besonders bevorzugt sind 2-Acrylamido-2-methylpropansulfonsäure und deren Salzverbindungen. Die den Salzverbindungen der Säuren zugehörigen Kationen können dabei jeweils als ein- oder zweiwertige Metallkationen vorliegen, wie vorzugsweise Natrium-, Kalium-, Calcium- oder Magnesiumionen oder als Ammoniumionen, die sich ableiten von Ammoniak, primären, sekundären oder tertiären, $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen. Die Alkylreste können jeweils verzweigt oder unverzweigt sein. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin. Bevorzugte Kationen sind Alkalimetallionen und/oder Ammoniumionen, besonders bevorzugt ist das Natriumion. In den anionischen superabsorbierenden Copolymeren sind die Sulfonsäuregruppen-haltigen Struktureinheiten von 10 bis 70 Mol.-%, bevorzugt von 15 bis 60 und ganz besonders bevorzugt von 20 bis 50 Mol.-% enthalten.

In den anionischen superabsorbierenden Copolymeren sind weiterhin (meth)acrylamidogruppenhaltige Struktureinheiten entsprechend der allgemeinen Formel (III) enthalten:

(III)

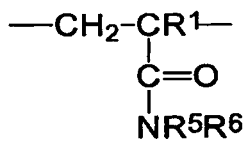

worin

$R^1$ die vorstehend genannte Bedeutung hat,

$R^5$ und $R^6$

jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird.

Die (meth)acrylamidogruppenhaltigen Struktureinheiten sind in analoger Weise auch in den kationischen superabsorbierenden Copolymeren enthalten. Die nachfolgende Beschreibung soll sowohl für die anionischen als auch

die kationischen superabsorbierenden Copolymere zutreffen. Beispielsweise gehen die Struktureinheiten aus der Copolymerisation von einer oder mehreren der Monomerspezies Acrylamid, Methacrylamid, N-Methyl(meth)acrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid hervor. Bevorzugt sind Methylacrylamid, N,N-Dimethylacrylamid, und Methacrylamid, besonders bevorzugt ist Acrylamid. In den anionischen und auch in den kationischen superabsorbierenden Copolymeren sind die (meth)acrylamidogruppenhaltigen Struktureinheiten von 30 bis 90 Mol.-%, bevorzugt von 40 bis 85 und ganz besonders bevorzugt von 50 bis 80 Mol.-% enthalten.

Die Struktureinheiten des anionischen superabsorbierenden Copolymers, die sich von bevorzugt wasserlöslichen Monomerverbindungen ableiten, die mehr als eine radikalisch polymerisierbare, ethylenisch ungesättigte Vinylgruppe aufweisen, sollen in der weiteren Beschreibung als Vernetzermonomere bezeichnet werden. Sie sind in analoger Weise auch in den kationischen superabsorbierenden Copolymeren enthalten. Die nachfolgende Beschreibung der Vernetzermonomere soll sowohl für die anionischen als auch die kationischen superabsorbierenden Copolymere zutreffen.

Bevorzugt geht die den Vernetzermonomeren entsprechende Struktureinheit aus der Polymerisation von einer oder mehrerer der folgenden Monomerspezies hervor: Mehrfach (meth)acrylfunktionelle Monomere, wie 1,4-Butandioldi(meth)acrylat, 1,3-Butylenglykoldiacrylat, 1,3-Butylenglykoldimethacrylat, Diethylenglykoldiacrylat, Diethylenglykoldimethacrylat, Ethylenglykoldimethacrylat ethoxyliertes Bisphenol-A-diacrylat, ethoxyliertes Bisphenol-A-dimethacrylat, Ethylenglykoldimethacrylat, 1,6-Hexandioldi(meth)acrylat, Neopentylglykoldimethacrylat, Polyethylenglykoldi(meth)acrylat, Triethylenglykoldi(meth)acrylat, Tripropylenglykoldiacrylat, Tetraethylenglykoldi(meth)acrylat, Dipentaerythritpentaacrylat, Pentaerythrittetraacrylat, Pentaerythrittriacrylat, Trimethylolpropantri(meth)acrylat, Cyclopentadiendiacrylat, Tris(2-hydroxyethyl)isocyanurattriacrylat und/oder Tris(2-hydroxy)isocyanurattrimethacrylat; mehr als eine Vinylester-, bzw. Allylestergruppe mit entsprechende Carbonsäure aufweisende Monomere wie zum Beispiel Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat; mehr als eine (Meth)acrylamidogruppe aufweisende Monomere wie N,N'-Methylenbisacrylamid und/oder N,N'-Methylenbismethacrylamid und mehr als eine Maleinimidgruppe aufweisende Monomere wie Hexamethylenbismaleinimid; mehr als eine Vinylethergruppe aufweisende Monomere wie Ethylenglykoldivinylether, Triethylenglykoldivinylether, Pentaerythrittriallylether und/oder Cyclohexandioldivinylether. Auch können Allylamino- oder Allylammoniumverbindungen mit mehr als einer Allylgruppe, wie Triallylamin und/oder Tetraallylammoniumsalze eingesetzt werden. Aus der Gruppe der mehr als eine vinylaromatische Gruppe aufweisenden Monomere sei Divinylbenzol genannt.

Bei der Auswahl der entsprechenden, mehr als eine ethylenisch ungesättigte Vinylgruppe aufweisenden Monomere ist bevorzugt darauf zu achten, dass diese in wässrigen Systemen, insbesondere bei den in zementösen Systemen zu erwartenden hohen pH-Werten eine gute Hydrolysebeständigkeit aufweisen. Beim Anmischen der Baustoffmischungen treten mechanische Belastungen als Scherkräfte auf, was gerade bei den hochmolekularen vernetzten Polymersystemen zum Bruch von Bindungen führen kann. Aus diesem Grund sind die entsprechenden methacrylfunktionellen gegenüber den acrylfunktionellen Vernetzermonomeren bevorzugt, die (meth)acrylamidofunktionellen und die allylamino, bzw. allyletherfunktionellen Monomere sind besonders bevorzugt. Beispiele für besonders bevorzugte Vernetzermonomere sind N,N'-Methylenbisacrylamid, N,N'-Methylenbismethacrylamid, Triallylisocyanurat, Triallylamin und/oder Tetraallylammoniumsalze sowie Pentaerythrittriallylether, insbesonders bevorzugte Vernetzermonomere sind N,N'-Methylenbisacrylamid, N,N'-Methylenbismethacrylamid, Triallylisocyanurat und / oder Triallylamin sowie Pentaerythrittriallylether. Es können jeweils eines oder mehrere der Vernetzermonomere in den Copolymeren vertreten sein. In den anionischen und kationischen superabsorbierenden Copolymeren sind die Vernetzermonomere von 0,03 bis 1 Mol.-%, bevorzugt von 0,05 bis 0,7 Mol.-% enthalten. Dabei soll die Menge der Vemetzermonomere mindestens so hoch gewählt werden, dass möglichst wasserunlösliche Copolymere, bzw. Copolymere mit einem geringen löslichen, bzw. einem geringen extrahierbaren Anteil, erhalten werden. Für den Fachmann ist dabei die Menge an Vernetzermonomeren durch Ausführung von Routineversuchen in einfacher Weise zu bestimmen. Die Vernetzung erfolgt im Laufe der Copolymerisationsreaktion, zusätzlich kann auch im Anschluss an die Copolymerisationsreaktion eine Nachvernetzung, wie sie für Superabsorber in "F. Buchholz, A. Graham, Modem Superabsorber Technology, John Wiley & Sons Inc., 1989, 55-67" beschrieben ist, erfolgen.

Neben den vorstehend genannten drei Typen von Struktureinheiten der anionischen Copolymere können noch von 1 bis 30 Mol.-% weitere, bevorzugt hydrophile Struktureinheiten enthalten sein. Diese leiten sich vorzugsweise von neutralen oder anionischen, ethylenisch ungesättigten Monomeren ab. Für kationische Monomere gelten die vorstehend genannten Beschränkungen bezüglich der Mengenanteile im anionischen Copolymer, d.h. es können bis zu 10 %, bevorzugt weniger als 5 % der anionischen Ladungen durch kationische Ladungen ersetzt werden. Als neutrale Monomere sind beispielsweise Acrylnitril, Methacrylnitril, Vinylpyridin, Vinylacetat und/oder hydroxygruppenhaltige (Meth)acrylsäureester wie Hydroxyethylacrylsäure, Hydroxypropylacrylsäure und/oder Hydroxypropylmethacrylsäure möglich.

Bevorzugt leiten sich die fakultativen Struktureinheiten von Monomeren ab, ausgewählt aus der Gruppe ethylenisch ungesättigter Carbonsäuren oder Dicarbonsäuren oder deren Anhydride wie Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, Maleinsäure und Maleinsäureanhydrid, p-Chlorzimtsäure, Itaconsäure, Citraconsäure, Mesacronsäure, Glutaconsäure, Aconitsäure, Fumarsäure und/oder Tricarboxyethylen. Besonders bevorzugt leiten sich die weiteren Struktureinheiten von Acrylsäure und seinen Salzen und/oder ethylenisch ungesättigten Sulfonsäuremonomeren und jeweils ihren entsprechenden Salzen wie Vinylsulfonsäure, Allylsulfonsäure, Styrolsulfonsäure, Sulfoethylacrylat, Sulfoethylmethacrylat, Sulfopropylacrylat, Sulfopropylmethacrylat und/oder 2-Hydroxy-3-methacryloxypropylsulfonsäure ab.

Im Folgenden sollen die kationischen superabsorbierenden Copolymere beschrieben werden. In den kationischen Copolymeren geht die der allgemeinen Formel (IV) entsprechende, ein quaterniertes Stickstoffatom aufweisende Struktureinheit bevorzugt hervor aus der Polymerisation von einer oder mehreren Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze und / oder [3-(Methacryloylamino)-propyl]-trimethylammoniumsalze:

(IV)

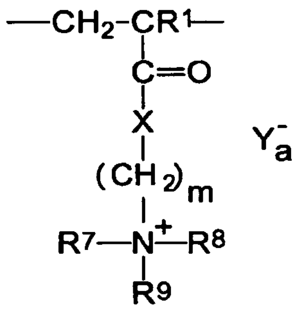

worin

$R^1$ die vorstehend genannte Bedeutung hat,

$R^7$ $R^8$, $R^9$, $R^{10}$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,

m gleich oder verschieden ist und durch eine ganze Zahl von 1 bis 6 repräsentiert wird,

X gleich oder verschieden ist und durch Sauerstoff und/oder N-$R^{10}$ repräsentiert wird,

$Y^-_a$ gleich oder verschieden ist und durch ein Halogenid, $C_1$-bis $C_4$-Alkylsulfat, $C_1$-bis $C_4$-Alkylsulfonat und/oder Sulfat, repräsentiert wird,

a gleich oder verschieden ist und durch 1/2 und/oder 1 repräsentiert wird,

Die genannten Salze liegen bevorzugt als Halogenide oder Methosulfate vor. Besonders bevorzugt sind [3-(Acryloylamino)-propyl]-trimethylammoniumsalze und/oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC). In den kationischen superabsorbierenden Copolymeren ist die ein quatemiertes Stickstoffatom aufweisende Struktureinheit der allgemeinen Formel III von 10 bis 70 Mol.-%, bevorzugt von 15 bis 60 und besonders bevorzugt von 20 bis 50 Mol.-% enthalten.

Ebenso wie die anionischen superabsorbierenden Copolymere enthalten auch die kationischen superabsorbierenden Copolymere die gleichen (meth)acrylamidogruppenhaltigen Struktureinheiten, gemäß der allgemeinen Formel (III). Die Struktureinheiten nach allgemeiner Formel (III) wurden vorstehend schon näher bei den anionischen Copolymeren beschrieben; auf diese Beschreibung wird hiermit verwiesen und sie soll an dieser Stelle als eingefügt gelten.

Auch die Struktureinheiten, die sich von bevorzugt wasserlöslichen Monomerverbindungen ableiten, die mehr als eine radikalisch polymerisierbare, ethylenisch ungesättigte Vinylgruppe aufweisen (Vernetzermonomere), sind ebenso im kationischen als auch im anionischen superabsorbierenden Copolymer enthalten. Diese Struktureinheit wurde ebenfalls vorstehend näher bei den anionischen superabsorbierenden Copolymeren beschrieben. Auf diese Beschreibung wird hiermit ebenfalls verwiesen und sie soll an dieser Stelle als eingefügt gelten.

Neben den vorstehend genannten drei Typen von Struktureinheiten der kationischen Copolymere können fakultativ noch von 1 bis 20 Mol.-% weitere, bevorzugt hydrophile Struktureinheiten enthalten sein. Diese leiten sich vorzugsweise von neutralen oder auch kationischen, ethylenisch ungesättigten Monomeren ab. Für anionische Monomere gelten die vorstehend genannten Beschränkungen bezüglich der Mengenanteile im kationischen Copolymer, d.h. es können bis zu 10 %, bevorzugt weniger als 5 % der kationischen Ladungen durch anionische Ladungen ersetzt werden. Als neutrale Monomere sind beispielsweise möglich Acrylnitril, Methacrylnitril, Vinylpyridin, Vinylacetat und/oder hydroxygruppenhaltige (Meth)acrylsäureester wie Hydroxyethylacrylsäure, Hydroxypropylacrylsäure und/oder Hydroxypropylmethacrylsäure. Als kationische Monomere sind bspw. N,N'-Dimethyl-diallyl-ammoniumchlorid und N,N'-Diethyl-diallylammoniumchlorid geeignet.

In einer besonders bevorzugten Ausführungsform des anionischen superabsorbierenden Copolymers sind Struktureinheiten enthalten, die sich von 20 bis 50 Mol.-% 2-Acrylamido-2-methylpropansulfonsäure (entspr. Struktureinheit I), 50 bis 80 Mol.-% Acrylamid (entspr. Struktureinheit II) ableiten und das Vernetzermonomer Triallylamin und/oder N,N'-Methylenbisacrylamid und/oder Pentaerythrittriallylether ist. In einer ebenfalls besonders bevorzugten Ausführungsform des kationischen superabsorbierenden Copolymers sind Struktureinheiten enthalten, die sich von 20 bis 50 Mol.-% [3-(Acryloylamino)-propyl]-trimethylammoniumchlorid (entspr. Formel (IV)), 50 bis 80 Mol.-% Acrylamid (entspr. Formel (III)) ableiten und das Vernetzermonomer Triallylamin und/oder N,N'-Methylenbisacrylamid und/oder Pentaerythrittriallylether ist.

Die Herstellung der erfindungsgemäßen anionischen oder kationischen superabsorbierenden Copolymere kann in an sich bekannter Weise durch Verknüpfung der die jeweiligen Struktureinheiten bildenden Monomere durch radikalische Polymerisation erfolgen (anionische Copolymere: Struktureinheiten nach den allgemeinen Formeln(II), (III) und vorstehend beschriebene Vernetzermonomere, optional weitere anionische oder neutrale Monomere; kationische Copolymere: Struktureinheiten nach den allgemeinen Formeln (VI), (III) und vorstehend beschriebene Vernetzermonomere, optional weitere kationische oder neutrale Monomere).

Alle als Säure vorliegenden Monomere können als freie Säuren oder in deren Salzform polymerisiert werden. Ferner kann die Neutralisation der Säuren durch Zugabe entsprechender Basen auch nach der Copolymerisation erfolgen, eine Teilneutralisation vor oder nach der Polymerisation ist ebenfalls möglich. Die Neutralisation der Monomere, bzw. der Copolymere kann beispielsweise mit den Basen Natrium-, Kalium-, Calcium- Magnesiumhydroxid und/oder Ammoniak erfolgen. Ebenfalls als Basen geeignet sind primäre, sekundäre oder tertiäre, jeweils verzweigte oder unverzweigte Alkylgruppen aufweisende $C_1$- bis $C_{20}$-Alkylamine, $C_1$- bis $C_{20}$-Alkanolamine, $C_5$- bis $C_8$-Cycloalkylamine und/oder $C_6$- bis $C_{14}$-Arylamine. Es können eine Base oder mehrere eingesetzt werden. Bevorzugt ist die Neutralisation mit Alkalimetallhydroxiden und/oder Ammoniak, besonders bevorzugt ist Natriumhydroxid. Die anorganischen oder organischen Basen sollen so ausgewählt werden, dass sie mit der jeweiligen Säure relativ gut wasserlösliche Salze bilden.

Die Copolymerisation der Monomere erfolgt bevorzugt durch radikalische Substanz-, Lösungs-, Gel, Emulsions-, Dispersions- oder Suspensionspolymerisation. Da es sich bei den erfindungsgemäßen Produkten um hydrophile, in Wasser quellbare Copolymere handelt, ist die Polymerisation in wässriger Phase, die Polymerisation in umgekehrter Emulsion, bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln.

Die Copolymerisation des superabsorbierenden Polymeren kann in einer besonders bevorzugten Ausführungsform als adiabatische Polymerisation durchgeführt und sowohl mit einem Redox-Initiatorsystem als auch mit einem Photoinitiator gestartet werden. Außerdem ist eine Kombination von beiden Startvarianten möglich. Das Redox-Initiatorsystem besteht aus mindestens zwei Komponenten, einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxid, Butylhydroperoxid oder Persäuren wie Peressigsäure. Daneben können aber auch andere Oxidationsmittel eingesetzt werden, zum Beispiel Kaliumpermanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (zum Beispiel Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze möglich [Kupfer(I); Mangan(II); Eisen(II)]. Auch Phosphorverbindungen können verwendet werden, zum Beispiel Natriumhypophosphit.

Im Falle einer Photopolymerisation wird diese mit UV-Licht gestartet, welches den Zerfall eines Photoinitiators bewirkt. Als Photoinitiator können zum Beispiel Benzoin und Benzoinderivate, wie Benzoinether, Benzil und seine Derivate, wie Benzilketale, Acryldiazoniumsalze, Azoinitiatoren wie z.B. 2,2'-Azobis(isobutyronitril), 2,2'-Azobis(2-amidinopropan)-hydrochlorid und/oder Acetophenonderivate verwendet werden.

Der Gewichtsanteil der oxidierenden und der reduzierenden Komponente im Falle der Redox-Initiatorsysteme liegt bevorzugt jeweils im Bereich zwischen 0,00005 und 0,5 Gew. %, besonders bevorzugt jeweils zwischen 0,001 und 0,1 Gew. %. Für Photoinitiatoren liegt dieser Bereich bevorzugt zwischen 0,001 und 0,1 Gew. %, besonders bevorzugt

zwischen 0,002 und 0,05 Gew. %. Die genannten Gew.%-Angaben für oxidierende und reduzierende Komponente und Photoinitiatoren beziehen sich dabei jeweils auf die Masse der zur Copolymerisation eingesetzten Monomere. Die Auswahl der Polymerisationsbedingungen, insbesondere der Initiatormengen erfolgt mit dem Ziel, möglichst langkettige Polymere zu erzeugen. Aufgrund der Unlöslichkeit der vernetzten Copolymere sind die Molekulargewichte einer Messung allerdings nur sehr schwer zugänglich.

Die Copolymerisation wird bevorzugt in wässriger Lösung, bevorzugt in konzentrierter wässriger Lösung diskontinuierlich in einem Polymerisationsgefäß (Batchverfahren) oder kontinuierlich nach der in der US-A-4857610 beschriebenen "endlosen Band" Methode durchgeführt. Eine weitere Möglichkeit ist die Polymerisation in einem kontinuierlich oder diskontinuierlich betriebenen Knetreaktor. Der Prozess wird üblicherweise bei einer Temperatur zwischen -20 und 20 °C, bevorzugt zwischen -10 und 10 °C gestartet und bei Atmosphärendruck ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt in der Regel eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen.

In einer weiteren bevorzugten Ausführungsform erfolgt die Copolymerisation als inverse Suspensionspolymerisation der wässrigen Monomerphase in einem organischen Lösemittel. Hierbei wird bevorzugt so verfahren, dass man das in Wasser gelöste und gegebenenfalls neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 5 Gew. %, bevorzugt 0,1 bis 3 Gew. %, bezogen auf die Monomere, verwendet werden. Die W/O-Emulgatoren und Schutzkolloide werden auch als Stabilisatoren bezeichnet. Es können übliche, in der inversen Suspensionspolymerisationstechnik als Stabilisatoren bekannte Verbindungen wie Hydroxypropylcellulose, Ethylcellulose, Methylcellulose, Celluloseacetatbutyratmischether, Copolymere aus Ethylen und Vinylacetat, aus Styrol und Butylacrylat, Polyoxyethylensorbitanmonooleat, -laurat, bzw. -stearat und Blockcopolymere aus Propylen- und/oder Ethylenoxid verwendet werden.

Als organische Lösemittel kommen beispielsweise lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin, sowie aromatische Kohlenwasserstoffe wie Benzol, Toluol und Xylol zum Einsatz. Darüber hinaus eignen sich Alkohole, Ketone, Carbonsäureester, Nitroverbindungen, halogenhaltige Kohlenwasserstoffe, Ether und viele andere organische Solventien. Bevorzugt sind solche organischen Lösemittel, die mit Wasser azeotrope Gemische bilden, besonders bevorzugt sind solche, die dabei einen möglichst hohen Wasseranteil im Azeotrop aufweisen.

Die wasserquellbaren Copolymere fallen zunächst in gequollener Form als fein verteilte wässrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein pulverförmiger Feststoff. Die inverse Suspensionspolymerisation hat bekanntlich den Vorteil, dass durch Variation der Polymerisationsbedingungen die Partikelgrößenverteilung der Pulver kontrolliert werden kann und damit ein zusätzlicher Verfahrensschritt (Mahlvorgang) zur Einstellung der Partikelgrößenverteilung meist vermieden werden kann.

Bevorzugt sind anionische und kationische superabsorbierende Copolymere deren gemäß der Norm edana 420.2-02 bestimmte Partikelgrößenverteilung so beschaffen ist, dass mehr als 98 Gew.-% ein Sieb der Maschengröße 200 $\mu$m passieren und besonders bevorzugt mehr als 98 Gew.-% ein Sieb der Maschengröße 100 $\mu$m passieren. Ganz besonders bevorzugt passieren mehr als 98 Gew.-% ein Sieb der Maschengröße 63 $\mu$m.

Die Partikelgrößenverteilung kann durch Mahlen der nach dem Trocknen der Copolymere erhaltenen Produkte erfolgen. Große Partikel würden in den wässrigen Baustoffmischungen auch schon visuell erkennbare inhomogene Bereiche hervorrufen, in denen nur das aus Quellung des Superabsorbers entstandene Hydrogel vorliegt. Auch bestünde verstärkt die Gefahr einer Entmischung der Hydrogele und weitere wichtige Eigenschaften wie zum Beispiel die Festigkeitsentwicklung könnten negativ beeinflusst werden. Auch die Wahrscheinlichkeit einer vom Anwender unerwünschten Nachverdickung ist bei großen Partikeln höher. Starke Scherkräfte wie sie zum Beispiel beim Anrühren der Baustoffmischungen mit einer zum Mischen von Fliesenklebern etc. üblichen Bohrmaschine oder ähnlichen Mischern auftreten, können sich bei großen Partikelgrößen stärker auswirken und zu einer Zerkleinerung der Hydrogele und damit einem Ansteigen der für den Verdickungseffekt verantwortlichen löslichen Anteile, bzw. extrahierbaren Anteile führen (Nachverdickungseffekt). Die Einstellung der richtigen Konsistenz der Baustoffmischung wird für den Anwender dann sehr schwierig. Eine Testmethode bezüglich der Scherstabilität besteht darin, z.B. einen erfindungsgemäßen Fliesenkleber mit Wasser anzurühren und dann mit einer Bohrmaschine noch weitere 30 Sekunden zu rühren. Danach sollte sich bevorzugt das Ausbreitmaß (ermittelt wie im Anspruch 1 beschrieben) um nicht mehr als 0,5 cm ändern.

Vorteilhafte superabsorbierende Copolymere entwickeln rasch ihre volle Wasseraufnahmekapazität in den

wässrigen Systemen. Eine langsame Wasseraufnahme würde ebenfalls zu einer unerwünschten Nachverdickung durch langsamen Wasserentzug aus der Baustoffmischung führen. Zur Überprüfung ob eine Nachverdickung vorliegt, gibt man zu der Baustoffmischung, z.B. ein Fliesenkleber, Wasser zu und rührt diese an. Nach der Wasserzugabe soll sich bevorzugt im Zeitraum zwischen der dritten und zehnten Minute das Ausbreitmaß um weniger als 0,5 cm verändern.

Eine bevorzugte Eigenschaft der anionischen aber auch der kationischen superabsorbierenden Copolymere ist ihre Unlöslichkeit in wässrigen Systemen, bzw. die Eigenschaft, nur einen geringen extrahierbaren Anteil aufzuweisen. Der extrahierbare Anteil ist der Anteil, der aus dem superabsorbierenden Polymer in ein umgebendes wässriges Medium diffundieren kann. Die Methode zu Bestimmung des extrahierbaren Anteils ist wie folgt beschrieben:

Die Bestimmung der Aufnahmekapazität der erfindungsgemäßen Superabsorber erfolgt gemäß der für die Hygieneindustrie entwickelten Norm edana 440.2-02 unter Abwandlung der Vorschrift, d.h. Ersatz der dort als Testflüssigkeit angegebenen 0,9 prozentigen Natriumchloridlösung durch eine einprozentige Calciumformiatlösung. Diese auch "Teebeuteltest" genannte Methode wird ausgeführt, indem man eine definierte Menge (etwa 200 mg) superabsorbierendes Polymer in einen Teebeutel einschweißt und 30 Minuten in eine einprozentige Calciumformiatlösung taucht. Anschließend lässt man die Teebeutel fünf Minuten lang abtropfen und wiegt sie aus. Ein Teebeutel ohne superabsorbierendes Polymer wird als Blindwert mitgeprüft. Zur Berechnung der Aufnahmekapazität verwendet man folgende Formel:

$$\text{Aufnahmekapazität} = (\text{Auswaage} - \text{Blindwert} - \text{Einwaage}) / \text{Einwaage (g/g)}$$

Bestimmung des extrahierbaren Anteils der superabsorbierenden Copolymere

Der extrahierbare Anteil wird durch eine Extraktion des superabsorbierenden Copolymeren in 0,9 prozentiger Natriumchloridlösung mit anschließender Total Organic Content (TOC-Bestimmung) durchgeführt. 1,0 g des superabsorbierenden Polymeren werden dazu in einem Liter 0,9 prozentiger Natriumchloridlösung sechzehn Stunden stehen gelassen und anschliessend abfiltriert. Nach Bestimmung des TOC-Gehalts des Filtrates berechnet man über den bekannten Kohlenstoffgehalt des superabsorbierenden Polymeren den extrahierbaren Anteil.

Der extrahierbare Anteil ist jeweils bezogen auf die Masse des Superabsorbers bevorzugt kleiner als 10 Gew. %, besonders bevorzugt kleiner als 9 Gew. % und insbesondere bevorzugt kleiner als 8 Gew. %.

Die Aufnahmekapazität der anionischen als auch kationischen Superabsorber in wässrigen Salzlösungen und insbesondere auch in Calciumionen enthaltenden Lösungen ist bevorzugt nicht zuletzt aus wirtschaftlichen Gründen möglichst groß. Bei Produkten, die nach dem Verfahren der Gelpolymerisation hergestellt sind, beträgt die Aufnahmekapazität bevorzugt mehr als 10 g/g, besonders bevorzugt mehr als 15 g/g und insbesondere bevorzugt ist sie größer als 20 g/g. Bei Produkten, die nach dem Verfahren der Inversen Suspensionspolymerisation hergestellt sind, ist die nach dem gleichen Verfahren ermittelte Aufnahmekapazität bevorzugt größer als 5 g/g, besonders bevorzugt größer als 10 g/g und insbesondere größer als 15 g/g. Sowohl die anionischen als auch die kationischen superabsorbierenden Copolymere sind in der Trockenmischung von 0,02 bis 2,0 Gew. % enthalten, bevorzugt von 0,1 bis 1,5 Gew. %, besonders bevorzugt von 0,2 bis 1,0 Gew. %. Gegenüber den kationischen superabsorbierenden Copolymeren sind die anionischen superabsorbierenden Copolymere bevorzugt.

Generell ist festzuhalten, dass es sich bei der Verbindung mit superabsorbierenden Eigenschaften, also der Komponente (b), gemäß vorliegender Erfindung um mind. eine Verbindung handelt, die einen Anteil an der Monomerkomponente 2-Acrylamido-2-methylpropansulfonsäure ("AMPS") enthält. Der Anteil an dieser Monomerkomponente sollte bis zu 50 Mol.-% betragen und liegt vorzugsweise zwischen 5 und 30 Mol.-%.

Erfindungswesentlich ist die Tatsache, dass es sich bei der Komponente (b) um ein Superabsorbierendes Polymer (SAP) mit anionischen und/oder kationischen Eigenschaften.

Bzgl. der Komponente (b) ist insbesondere hervorzuheben, dass die jeweils genannten Vertreter keine assoziativ verdickenden Eigenschaften aufweisen.

f) Neben der Trockenmörtelmischung selbst, beansprucht die vorliegende Erfindung auch noch deren Verwendung. Hierbei stehen insbesondere Fliesenkleber, Reparaturmörtel, Fugenmörtel und Putze im Vordergrund. Möglich ist allerdings auch die Verwendung der Trockenmörtelmischung als Bestandteil von Putzen. Ferner kommt die Verwendung als Klebe- und/oder Armierungsmörtel für Wärmedämmverbundsysteme ("WDVS") in Frage.

Die Verwendung der erfindungsgemäßen Baustoffmischung erfolgt bevorzugt als Fliesenkleber gemäß DIN EN 12004, als Dichtschlämme, Fugenfüller gemäß EN 13888, Reparaturmörtel gemäß EN 1504, Spachtelmasse, Putz gemäß EN 998-1 und als Klebe- und Armierungsmörtel für Wärmedämmverbundsysteme (WDVS) gemäß EN 13499 und EN 13500. Unter Reparaturmörteln versteht man zum Beispiel Mörtel zur Reparatur oder Ersatz von beschädigtem

Beton. Spachtelmassen dienen zum Beispiel zur abschließenden Bearbeitung eines Untergrunds, um ebene Flächen (Wände oder Decken) zu erhalten. Wärmedämmverbundsysteme sind isolierende Systeme, die meist unter Verwendung von werkmäßig hergestellten Wärmedämmstoffen auf der Baustelle zum Einsatz kommen. Zur Befestigung verwendet man Klebemörtel, falls eine mechanische Befestigung (Armierung) angebracht werden soll, spricht man von einem Armierungsmörtel.

Insgesamt eigenen sich Anwendungsgebiete, die der Trockenmörtelmischung eine gewisse Standfestigkeit im angemachten, aber noch nicht ausgehärteten Zustand abverlangen.

Ein weiterer Gesichtspunkt der vorliegenden Erfindung besteht darin, dass bei Anwendungen im Zusammenhang mit Reparaturmörteln, Fugenmörteln, Putzen oder Wärmedämmverbundsystemen die Trockenmörtelmischung eine Kombination der Komponenten (a) + (b) + (c) enthält. Bei Anwendungen als Fliesenkleber sollte die Trockenmörtelmischung eine Kombination der Komponenten (a) + (b) enthalten. Das Hydrophobierungsmittel ist in diesem Falle nicht erforderlich, kann aber im Bedarfsfall selbstverständlich zugemischt werden.

Grundsätzlich eignen sich die beanspruchten und beschriebenen Trockenmörtelmischungen insbesondere für Anwendungen im Außenbereich.

Die Herstellung der beanspruchten Trockenmörtelmischungen unterliegt keinerlei Beschränkung:

Durch Vermischen der erfindungsgemäßen Trockenmörtelmischungen mit Wasser erhält man einsatzfertige Baustoffmischungen. Der Anwender kann aufgrund der erfindungsgemäßen Kombination der Dispergiermittel-Komponente a) mit dem superabsorbierenden Copolymer b) den Wasseranspruch nach Wunsch einstellen. Ansonsten bestimmt sich der Wasseranspruch der Baustoffsysteme nach Art und Menge der Trockenmischungskomponenten und den jeweiligen Anforderungen der Verwendung.

Die nachfolgenden Beispiele sollen die Vorteile dieser Erfindung verdeutlichen.

1. Beispiel Standfester Fliesenkleber:

Standfester Fliesenkleber (37 Gew.-% Portlandzement)

Zusammensetzung:

| Mischung 1.1 (Vergleich) | Gew.-% |
|---|---|
| OPC CEM I 52,5 R | 37,000 |
| Quarzsand 0,1 - 0,4 mm | 47,000 |
| Metakaolin | 3,000 |
| Kalksteinmehl | 3,000 |
| Hüttensand | 4,000 |
| Calciumformiat | 1,000 |
| Cellulose-Faser | 0,700 |
| Dispersionspulver | 3,000 |
| Celluloseether | 0,400 |
| Verdicker (organisch)<br><br>oder<br>Verdicker (anorganisch) | 1) 0,12<br>2) 0,08<br><br>0,57 |
| Wasser | 21,000 |

| Mischung 1.2 (Vergleich) | |
|---|---|
| OPC CEM I 52,5 R | 37,000 |

(fortgesetzt)

| Mischung 1.2 (Vergleich) | |
|---|---|
| Quarzsand 0,1 - 0,4 mm | 48,000 |
| Metakaolin | 3,000 |
| Kalksteinmehl | 3,000 |
| Hüttensand | 4,000 |
| Calciumformiat | 1,000 |
| Dispersionspulver | 3,000 |
| Celluloseether | 0,400 |
| Verdicker (organisch)<br><br>oder | 1) 0,10<br>2) 0,05 |
| Verdicker (anorganisch) | Rest |
| Superabsorber Polymer (Komponente b) | 0,43 |
| Wasser | 21,000 |

| Mischung 1.3 (Erfindung) | Gew.-% |
|---|---|
| OPC CEM I 52,5 R | 37,000 |
| Quarzsand 0,1 - 0,4 mm | 48,000 |
| Metakaolin | 3,000 |
| Kalksteinmehl | 3,000 |
| Hüttensand | 4,000 |
| Calciumformiat | 1,000 |
| Dispersionspulver | 3,000 |
| Celluloseether | 0,400 |
| Verdicker (organisch)<br><br>oder<br>Verdicker (anorganisch) | 1)0,10<br>2) 0,05<br><br>Rest |
| Verflüssiger (Dispergiermittel a) | 0,09 |
| Superabsorber Polymer (Komponente b) | 0,43 |
| Wasser | 21,000 |

| | |
|---|---|
| OPC CEM I 52,5 R | Milke CEM I 52,5 R (HeidelbergCement, Ennigerloh) |
| Cellulosefaser | Arbocel FD 40 (Rettenmaier, Rosenberg) |
| Dispersionspulver | Vinnapas LL 7200 (Wacker Chemie AG, München) |
| Celluloseether | Culminal 65.000 PF (Hercules Aqualon) |
| Dispergiermittel | Melflux 2651 F (BASF Construction Polymers GmbH, Trostberg) |
| Verdicker (anorg.)<br>Verdicker (organ.) | Bentonit<br>1) Starvis T50F |

(fortgesetzt)

| | |
|---|---|
| OPC CEM I 52,5 R | Milke CEM I 52,5 R (HeidelbergCement, Ennigerloh) |
| | 2) Starvis SE35F |

Die Komponente b) wurde folgendermaßen hergestellt:

Anionisches superabsorbierendes Copolymer:
In einem 2 I-Dreihalskolben mit Rührer und Thermometer wurden 160 g Wasser vorgelegt und anschließend nacheinander 352,50 g (0,74 mol, 28 Mol-%) 2-Acrylamido-2-methylpropansulfonsäure Natriumsalz (50 Gew.-%ige Lösung in Wasser), 286,40 g (2,0 mol, 72 Mol-%) Acrylamid (50 Gew.-%ige Lösung in Wasser) und 0,3 g (0,0021 mol, 0,08 Mol-%) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b · t · h) 15 cm · 10 cm -20 cm umgefüllt und anschließend wurden nacheinander 16 g einprozentige 2,2'-Azobis-(2-amidinopropan)-dihydrochlorid Lösung, 20 g einprozentige Natriumperoxodisufat Lösung 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennfiittel handelt es sich um eine Polydimethylsiloxanemulsion, die im Verhältnis eins zu zwanzig mit Wasser verdünnt wurde.
Das erhaltene Gelgranulat des Copolymers wurde gleichmäßig auf Trockengitter verteilt und in einem Umlufttrockenschrank bei ca. 120 bis 140 °C bis zur Gewichtskonstanz getrocknet. Es wurden ca. 375 g eines weißen, harten Granulats erhalten, welches mit Hilfe einer Zentrifugalmühle in einen pulverförmigen Zustand überführt wurde. Der mittlere Teilchendurchmesser des Polymerpulvers betrug 30 bis 50 μm und der Anteil an Partikeln, die ein Sieb der Maschengröße 63 μm nicht passieren, war kleiner als 2 Gew. %.

Testergebnisse:

| Mischung | 1.1 | 1.2 | 1.3 |
|---|---|---|---|
| Stand [Abrutschen in mm einer 1000 g Fliese] | unter 1,00 | unter 1,00 | unter 1,00 |
| Klebeoffene Zeit [min] | 25 | 20 | 25 |
| Viskosität nach Brookfield [mPa*s*103] | 1580 | 1350 | 1370 |
| Haftzugfestigkeit 7 d trocken auf Beton [N/mm$^2$] | 0,93 | 1,38 | 1,64 |
| Haftzugfestigkeit 28 d trocken auf Beton [N/mm$^2$] | 0,94 | 1,55 | 1,51 |
| Haftzugfestigkeit 7 d trocken 21 d nass auf Beton [N/mm$^2$] | 1,62 | 1,50 | 1,74 |
| Haftzugfestigkeit 14 d 20°C 14 d 70°C Wärme [N/mm$^2$] | 0,82 | 1,21 | 1,46 |

Zusammenfassung:

Mit der erfindungsgemäßen Mischung 1.3 von Superabsorber und Fließmittel konnte die Haftzugfestigkeit auf Betonuntergründen signifikant verbessert werden. Außerdem konnten ein besseres Aufziehverhalten, eine bessere und verlängerte Korrigierbarkeit der Fliese und längere Klebeoffenen-Zeiten beobachtet werden. Die Viskosität wurde verringert, wodurch angenehmere Verarbeitungseigenschaften erzielt werden und die Klebrigkeit zum Werkzeug verringert werden kann.

2. Beispiel Klebe- und Armiermörtel:

Klebe- und Armiermörtel (20 Gew.-% Portlandzement)

Zusammensetzung:

| Mischung 2.1 (Vergleich) | % |
|---|---|
| OPC CEM I 42,5 R | 20,000 |
| Quarzsand 0,1 - 0,4 mm | 40,000 |
| Quarzsand 0,3 - 1,0 mm | 29,135 |
| Kalksteinmehl | 8,000 |
| Cellulose-Faser | 0,300 |
| Acryl-Faser 6 mm / 3 mm | 0,015 |
| Dispersionspulver | 2,000 |
| Modifizierter Celluloseether | 0.150 |
| Natriumoleat | 0,200 |
| Calciumstearat | 0,200 |
| Wasser | 25,000 |

| Mischung 2.2 (Vergleich) | % |
|---|---|
| OPC CEM I 42,5 R | 20,000 |
| Quarzsand 0,1 - 0,4 mm | 40,000 |
| Quarzsand 0,3 - 1,0 mm | 30,035 |
| Kalksteinmehl | 8,000 |
| Cellulose-Faser | 0,300 |
| (Acryl-Faser 6 mm / 3 mm | 0,015 |
| Dispersionspulver | 1,000 |
| Modifizierter Celluloseether | 0,130 |
| Superabsorber Polymer (Komponente b) | 0,170 |
| Natriumoleat | 0,150 |
| Calciumstearat | 0,150 |
| Wasser | 30,000 |

| Mischung 2.3 (Erfindung) | % |
|---|---|
| OPC CEM I 42,5 R | 20,000 |
| Quarzsand 0,1 - 0,4 mm | 40,000 |
| Quarzsand 0,3 - 1,0 mm | 30,035 |
| Kalksteinmehl | 8,000 |
| Cellulose-Faser | 0,300 |
| Acryl-Faser 6 mm / 3 mm | 0,015 |
| Dispersionspulver | 1,000 |
| Modifizierter Celluloseether | 0,130 |

(fortgesetzt)

| Mischung 2.3 (Erfindung) | % |
|---|---|
| Superabsorber Polymer (Komponente b) | 0,170 |
| Dispergiermittel a) | 0,05 |
| Natriumoleat | 0,150 |
| Calciumstearat | 0,150 |
| Wasser | 25,000 |

b) Klebe- und Armiermörtel (30 Gew.-% Portlandzement)

Zusammensetzung:

| Mischung 2.4 (Vergleich) | % |
|---|---|
| OPC CEM I 42,5 R | 30,000 |
| Quarzsand 0,1 - 0,4 mm | 38,000 |
| Quarzsand 0,3 - 1,0 mm | 28,335 |
| Cellulose-Faser | 0,300 |
| Acryl-Faser 6 mm / 3 mm | 0,015 |
| Dispersionspulver | 3,000 |
| Modifizierter Celluloseether | 0,150 |
| Natriumoleat | 0,200 |
| Wasser | 25,000 |

| Mischung 2.5 (Vergleich) | % |
|---|---|
| OPC CEM I 42,5 R | 30,000 |
| Quarzsand 0,1 - 0,4 mm | 38,000 |
| Quarzsand 0,3 - 1,0 mm | 29,635 |
| Cellulose-Faser | 0,300 |
| Acryl-Faser 6 mm / 3 mm | 0,015 |
| Dispersionspulver | 1,500 |
| Modifizierter Celluloseether | 0,130 |
| Superabsorber Polymer (Komponente b) | 0,170 |
| Natriumoleat | 0,200 |
| Wasser | 31,000 |

| Mischung 2.6 (Erfindung) | % |
|---|---|
| OPC CEM I 42,5 R | 30,000 |
| Quarzsand 0,1 - 0,4 mm | 38,000 |

(fortgesetzt)

| Mischung 2.6 (Erfindung) | % |
|---|---|
| Quarzsand 0,3 - 1,0 mm | 29,635 |
| Cellulose-Faser | 0,300 |
| (Acryl-Faser 6 mm / 3 mm | 0,015 |
| Dispersionspulver | 1,500 |
| Modifizierter Celluloseether | 0,130 |
| Superabsorber Polymer (Komponente b) | 0,170 |
| Dispergiermittel a) | 0,050 |
| Natriumoleat | 0,200 |
| Wasser | 25,000 |

| | |
|---|---|
| OPC CEM I 42,5 R | Milke CEM I 42,5 R (HeidelbergCement, Ennigerloh) |
| Cellulosefaser | Arbocel FD 40 (Rettenmaier, Rosenberg) |
| Acrylfaser | Panacea dry (Lambda Furtherance b.v., Den Haag, NL) |
| Dispersionspulver | Vinnapas 7034 N (Wacker Chemie AG, München) |
| Modifizierter Celluloseether | Tylose MH 15002 P6 (Shin-Etsu, Wiesbaden) |
| Natriumoleat | Natriumoleat (Baerlocher GmbH, Unterschleißheim) |
| Dispergiermittel a) | Melflux 2651 F (BASF Construction Polymers GmbH, Trostberg) |
| Calciumstearat | Calciumstearat (Bearlocher GmbH, Unterschleißheim) |

Testergebnis:

| Mischung | 2.1 | 2.2 | 2.3 | 2.4 | 2.5 | 2.6 |
|---|---|---|---|---|---|---|
| Ausbreitmaß 5 Minuten[cm] | 16,5 | 16,5 | 16,4 | 16,9 | 16,9 | 16,8 |
| Haftzugfestigkeit 28 d trocken auf EPS 035 [$N/mm^2$] | 0,10 | 0,08 | 0,13 | 0,16 | 0,11 | 0,15 |
| Haftzugfestigkeit 28 d trocken + 2 d nass + 2 h trocken auf EPS 035 [$N/mm^2$] | 0,10 | 0,05 | 0,10 | 0,17 | 0,13 | 0,17 |
| Haftzugfestigkeit 28 d trocken + 2 d nass + 7 d trocken auf EPS 035 [$N/mm^2$] | 0,13 | 0,07 | 0,15 | >0,27[1] | 0,17 | >0,27[1] |
| Haftzugfestigkeit 28 d trocken auf Beton [$N/mm^2$] | 1,3 | 0,8 | 1,2 | 2,1 | 1,6 | 1,8 |
| Haftzugfestigkeit 28 d trocken + 2 d nass + 2 h trocken auf Beton [$N/mm^2$] | 0,5 | 0,4 | 0,6 | 1,4 | 1,0 | 1,4 |
| Haftzugfestigkeit 28 d trocken + 2 d nass + 7 d trocken auf Beton [$N/mm^2$] | 1,0 | 0,8 | 1,0 | 1,8 | 1,4 | 1,7 |
| Kapillare Wasseraufnahme [$kg/m^2$] | 1,3 | 2,6 | 1,2 | 1,2 | 1,8 | 0,4 |
| [1] Vollflächiger Styropor®-Ausriss | | | | | | |

Zusammenfassung:

In den erfindungsgemäßen Mischungen 2.3 und 2.6 mit der Kombination von Superabsorber und Dispergiermittel konnte zum einen die Haftung auf hydrophoben Untergründen, wie EPS, konstant gehalten bzw. leicht verbessert werden, obwohl die Menge an Dispersionspulver halbiert wurde. Dies bedingt einen Kostenvorteil für den Trockenmörtelhersteller. Zum anderen kann man erkennen, dass sich durch die Kombination von Dispergiermitteln und Superabsorbern die Neigung, Wasser in die Mörtelmatrix zu absorbieren, reduziert hat. Dies ermöglicht eine erhöhte Dauerhaftigkeit bei Frost-Tau Belastungen sowie die Möglichkeit, den Anteil an Hydrophobierungsmittel zu reduzieren.

**Patentansprüche**

1. Trockenmörtelmischung auf Basis mind. eines hydraulischen und/oder latent hydraulischen Bindemittels, die im angemachten und nichtausgehärteten Zustand standfeste Eigenschaften (standfeste Eigenschaften bestimmt gemäß DIN EN 1308 , mit einem Ausbreitmaß < 18 cm, bestimmt nach DIN EN 1015-3) aufweist, **dadurch gekennzeichnet, dass** sie mindestens einen Vertreter eines Dispergiermittels (a) ausgewählt aus der Reihe Verbindung mind. enthaltend ein verzweigtes Kammpolymer mit Polyether-Seitenketten, Naphthalinsulfonat-Formaldehyd-Kondensat ("BNS") und Melaminsulfonat-Formaldehyd-Kondensat ("MFS") in einer Menge von 0,01 bis 5,0 Gew.-%, bezogen auf die Gesamtzusammensetzung der Trockenmörtelmischung enthält, wobei sämtliche Vertreter einzeln aber auch in geeigneten Mischungen in der vorgeschlagenen Trockenmörtelmischung vertreten sein können, und mindestens eine Verbindung mit superabsorbierenden Eigenschaften (b), die einen Anteil an der Monomerkomponente 2-Acrylamido-2-methylpropansulfonsäure ("AMPS") von 0 bis 50 Mol-% aufweist, und/oder bei der es sich um ein Superabsorbierendes Polymer ("SAP") mit anionischen und/oder kationischen Eigenschaften handelt.

2. Trockenmörtelmischung nach Anspruch 1, **dadurch gekennzeichnet, dass** sie als weitere Komponente (c) ein Hydrophobierungsmittel enthält.

3. Trockenmörtelmischung nach einem der Ansprüche 1 oder 2, **dadurch gekennzeichnet, dass** sie als hydraulisches Bindemittel mind. einen Vertreter ausgewählt aus der Reihe Zement, insbesondere mindestens ein Portlandzement aus der Reihe CEM I, II, III, IV und V, Weisszement, gebranntem Kalk sowie Aluminatzement, vorzugsweise in Anteilen von 3 bis 50 Gew.-%, bezogen auf die Gesamtzusammensetzung der Trockenmörtelmischung, enthält.

4. Trockenmörtelmischung nach einem der Ansprüche 1 bis 3, **dadurch gekennzeichnet, dass** sie als latent hydraulisches Bindemittel mindestens einen Vertreter ausgewählt aus der Reihe Flugasche, Hochofenschlacke, Metakaolin, Mikrosilika, Trassmehl, Alumosilikat, Tuff, Phonolith, Diatomeenerde und Ölschiefer, vorzugsweise in Anteilen von 5 bis 50 Gew.-%, bezogen auf die Gesamtzusammensetzung der Trockmörtelmischung, enthält.

5. Trockenmörtelmischung nach einem der Ansprüche 1 bis 4, **dadurch gekennzeichnet, dass** sie als Aggregate Zuschlagsstoffe mit einer durchschnittlichen Korngröße bis 5 mm, vorzugsweise zwischen 0,5 und 3 mm und besonders bevorzugt zwischen 1,0 und 2,0 mm, insbesondere in Anteilen von 5 bis 85 Gew.-%, bezogen auf die Gesamtzusammensetzung der Trockenmörtelmischung, enthält.

6. Trockenmörtelmischung nach einem der Ansprüche 1 bis 5, **dadurch gekennzeichnet, dass** es sich bei den Aggregaten um silikatische Sande, silikatische Mehle, Carbonate in Form von Kalksteinmehlen, Kalksteinbrechsanden, Kreide, Dolomit, Magnesit und Mischungen daraus handelt.

7. Trockenmörtelmischung nach einem der Ansprüche 1 bis 6, **dadurch gekennzeichnet, dass** sie das Hydrophobierungsmittel in einer Menge von 0,1 bis 0,6 Gew.-%, vorzugsweise in einer Menge von 0,2 bis 0,4 Gew.-% und insbesondere 0,2 bis 0,3 Gew.-%; bezogen auf die Gesamtzusammensetzung der Trockenmörtelmischung, enthält.

8. Trockenmörtelmischung nach einem der Ansprüche 1 bis 7, **dadurch gekennzeichnet, dass** das Mengenverhältnis (a) : (b) in der Kombination (a) + (b) 1 : 0,5 bis 5 beträgt.

9. Trockenmörtelmischung nach einem der Ansprüche 1 bis 8, **dadurch gekennzeichnet, dass** das Mengenverhältnis (a) : (b) : (c) in der Kombination (a) + (b) + (c) 1 : 0,5 bis 5 : 2 bis 6 beträgt.

10. Trockenmörtelmischung nach einem der Ansprüche 1 bis 9, **dadurch gekennzeichnet, dass** sie die Kombination (a) + (c) in Anteilen von 0,20 bis 0,8 Gew.-%, bevorzugt von 0,25 bis 0,45 Gew.-% und besonders bevorzugt von 0,25 bis 0,35 Gew.-%, jeweils bezogen auf die Gesamtzusammensetzung der Trockenmörtelmischung, enthält.

11. Trockenmörtelmischung nach einem der Ansprüche 1 bis 10, **dadurch gekennzeichnet, dass** sie die Kombination

(b) + (c) in Anteilen von 0,3 bis 1,0 Gew.-%, bevorzugt von 0,3 bis 0,8 Gew.-% und besonders bevorzugt von 0,35 bis 0,6 Gew.-%, jeweils bezogen auf die Gesamtzusammensetzung der Trockenmörtelmischung, enthält.

**12.** Trockenmörtelmischung nach einem der Ansprüche 1 bis 11, **dadurch gekennzeichnet, dass** sie die Kombination (a) + (b) + (c) in Anteilen von 0,4 bis 1,0 Gew.-%, bevorzugt von 0,4 bis 0,8 Gew.-% und besonders bevorzugt von 0,5 bis 0,7 Gew.-%, jeweils bezogen auf die Gesamtzusammensetzung der Trockenmörtelmischung, enthält.

**13.** Trockenmörtelmischung nach einem der Ansprüche 1 bis 12, **dadurch gekennzeichnet, dass** sie als Dispergiermittel (a) ein Polykondensationsprodukt, enthaltend

(I) mind. eine einen Aromaten oder Heteroaromaten und eine Polyetherseitenkette aufweisende Struktureinheit und
(II) mind. eine phosphatierte, einen Aromaten oder Heteroaromaten aufweisende Struktureinheit und
(III) mind. eine einen Aromaten oder Heteroaromaten aufweisende Struktureinheit enthält,

wobei sich die Struktureinheit (II) und Struktureinheit (III) ausschließlich dadurch unterscheiden, dass die $OP(OH)_2$-Gruppe der Struktureinheit (II) in Struktureinheit (III) durch H ersetzt ist und Struktureinheit (III) ungleich Struktureinheit (I) ist.

**14.** Trockenmörtelmischung nach einem der Ansprüche 12 oder 13, **dadurch gekennzeichnet, dass** sie Mischungen der genannten Dispergiermittelvertreter enthält.

**15.** Trockenmörtelmischung nach einem der Ansprüche 1 bis 14, **dadurch gekennzeichnet, dass** sie als Komponente (b) mind. eine Verbindung enthält, die einen Anteil an der Monomerkomponente 2-Acrylamido-2-methylpropansulfonsäure ("AMPS") von 5 bis 30 Mol-% aufweist.

**16.** Trockenmörtelmischung nach Anspruch 1, **dadurch gekennzeichnet, dass** die Komponente (b) als anionisches Monomer mind. einen Vertreter ausgewählt aus der Reihe ethylenisch ungesättigte, wasserlösliche Carboxylsäure und deren Derivate und/oder ethylenisch ungesättigte Sulfonsäuremonomere enthält.

**17.** Trockenmörtelmischung nach Anspruch 16, **dadurch gekennzeichnet, dass** es sich bei der ethylenisch ungesättigten Carbonsäure oder bei dem Carbonsäureanhydritmonomer um Acrylsäure, Methacrylsäure, Ethacrylsäure, α-Chloracrylsäure, α-Cyanoacrylsäure, β-Methacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid handelt, und dass das ethylenisch ungesättigte Sulfonsäuremonomer eine aliphatische oder aromatische Vinylsulfonsäure oder eine acrylische oder methacrylische Sulfonsäure und vorzugsweise eine Vinylsulfonsäure, Allylsulfonsäure, Vinyltoluolsulfonsäure oder Styrolsulfonsäure ist.

**18.** Trockenmörtelmischung nach einem der Ansprüche 15 bis 17, **dadurch gekennzeichnet, dass** es sich bei dem kationischen Monomer um Monomere mit permanenten kationischen Ladungen handelt und insbesondere um [3-(Acryloylamino)-propyl]-trimethylammoniumsalze und oder [3-(Methacryloylamino)-propyl]-trimethylammoniumsalze und bevorzugt um deren Halogenide, Sulfate oder Methosulfate.

**19.** Trockenmörtelmischung nach einem der Ansprüche 1 bis 18, **dadurch gekennzeichnet, dass** sie als Hydrophobierungsmittel (c) mind. einen Vertreter der Fettsäurederivate, insbesondere $C_{1-14}$-Alkylester und -Alkylarylester der Laurinsäure und/oder der Ölsäure, Mono- und/oder Diglykolester der Laurin- und/oder der Ölsäure, Mono-, Di- und Trifettsäureester des Glyzerins mit Laurin- und/oder Ölsäure, Metallsalze von Fettsäuren und besonders bevorzugt Zinkstearat und/oder Natriumoleat enthält.

**20.** Verwendung der Trockenmörtelmischung nach einem der Ansprüche 1 bis 19 als Fliesenkleber, Reparaturmörtel, Fugenmörtel, Putz oder dessen Bestandteil, als Klebe- und/oder Armierungsmörtel für Wärmedämmverbundsysteme ("WDVS").

**21.** Verwendung nach Anspruch 20, **dadurch gekennzeichnet, dass** bei Anwendungen im Zusammenhang mit Reparaturmörteln, Fugenmörteln, Putzen oder Wärmedämmverbundsystemen die Trockenmörtelmischung eine Kombination der Komponenten (a) + (b) + (c) enthält.

**22.** Verwendung nach Anspruch 20, **dadurch gekennzeichnet, dass** bei Anwendungen als Fliesenkleber die Trockenmörtelmischung eine Kombination der Komponenten (a) + (b) enthält.

**23.** Verwendung nach einem der Ansprüche 20 bis 22 im Außenbereich.

## Claims

**1.** Dry mortar mixture based on at least one hydraulic and/or latently hydraulic binder, which in the made-up and uncured state has firm properties (firm properties determined in accordance with DIN EN 1308, with a slump of < 18 cm, determined in accordance with DIN EN 1015-3), **characterized in that** it contains at least one representative of a dispersant (a) selected from the group consisting of compound containing at least a branched comb polymer having polyether side chains, naphthalenesulphonate-formaldehyde condensate ("BNS") and melaminesulphonate-formaldehyde condensate ("MFS") in an amount of from 0.01 to 5.0% by weight, based on the total composition of the dry mortar mixture, where all the representatives can be present individually or else in suitable mixtures in the proposed dry mortar mixture, and at least one compound having superabsorbent properties (b) which has a proportion of the monomer component 2-acrylamido-2-methylpropanesulphonic acid ("AMPS") of from 0 to 50 mol%, and/or which is a superabsorbent polymer ("SAP") having anionic and/or cationic properties.

**2.** Dry mortar mixture according to Claim 1, **characterized in that** it contains a hydrophobicizing agent as further component (c).

**3.** Dry mortar mixture according to either Claim 1 or 2, **characterized in that** it contains at least one representative selected from the group consisting of cement, in particular at least one portland cement from the group CEM I, II, III, IV and V, white cement, quicklime and aluminate cement as hydraulic binder, preferably in proportions of from 3 to 50% by weight, based on the total composition of the dry mortar mixture.

**4.** Dry mortar mixture according to any of Claims 1 to 3, **characterized in that** it contains at least one representative selected from the group consisting of fly ash, blast furnace slag, metakaolin, microsilica, trass flour, aluminosilicate, tuff, phonolite, diatomaceous earth and oil shale as latently hydraulic binder, preferably in proportions of from 5 to 50% by weight, based on the total composition of the dry mortar mixture.

**5.** Dry mortar mixture according to any of Claims 1 to 4, **characterized in that** it contains aggregates having an average particle size up to 5 mm, preferably from 0.5 to 3 mm and particularly preferably from 1.0 to 2.0 mm, as aggregates, in particular in proportions of from 5 to 85% by weight, based on the total composition of the dry mortar mixture.

**6.** Dry mortar mixture according to any of Claims 1 to 5, **characterized in that** the aggregates are siliceous sands, siliceous flours, carbonates in the form of ground limestone, crushed limestone sands, chalk, dolomite, magnesite and mixtures thereof.

**7.** Dry mortar mixture according to any of Claims 1 to 6, **characterized in that** it contains the hydrophobicizing agent in an amount of fro 0.1 to 0.6% by weight, preferably in an amount of from 0.2 to 0.4% by weight and in particular from 0.2 to 0.3% by weight; based on the total composition of the dry mortar mixture.

**8.** Dry mortar mixture according to any of Claims 1 to 7, **characterized in that** the ratio (a):(b) in the combination (a) + (b) is 1:0.5-5.

**9.** Dry mortar mixture according to any of Claims 1 to 8, **characterized in that** the ratio (a):(b):(c) in the combination (a) + (b) + (c) is 1:0.5-5:2-6.

**10.** Dry mortar mixture according to any of Claims 1 to 9, **characterized in that** it contains the combination (a) + (c) in a proportion of from 0.20 to 0.8% by weight, preferably from 0.25 to 0.45% by weight and particularly preferably from 0.25 to 0.35% by weight, in each case based on the total composition of the dry mortar mixture.

**11.** Dry mortar mixture according to any of Claims 1 to 10, **characterized in that** it contains the combination (b) + (c) in a proportion of from 0.3 to 1.0% by weight, preferably from 0.3 to 0.8% by weight and particularly preferably from 0.35 to 0.6% by weight, in each case based on the total composition of the dry mortar mixture.

**12.** Dry mortar mixture according to any of Claims 1 to 11, **characterized in that** it contains the combination (a) + (b) + (c) in a proportion of from 0.4 to 1.0% by weight, preferably from 0.4 to 0.8% by weight and particularly preferably from 0.5 to 0.7% by weight, in each case based on the total composition of the dry mortar mixture.

**13.** Dry mortar mixture according to any of Claims 1 to 12, **characterized in that** it contains a polycondensation product containing

(I) at least one structural unit having an aromatic or heteroaromatic and a polyether side chain and
(II) at least one phosphated structural unit having an aromatic or heteroaromatic and
(III) at least one structural unit having an aromatic or heteroaromatic,

where the structural unit (II) and the structural unit (III) differ exclusively **in that** the $OP(OH)_2$ group of the structural unit (II) is replaced by H in structural unit (III) and structural unit (III) is different from structural unit (I), as dispersant (a).

**14.** Dry mortar mixture according to either Claim 12 or 13, **characterized in that** it contains mixtures of the representatives of dispersants mentioned.

**15.** Dry mortar mixture according to any of Claims 1 to 14, **characterized in that** it contains at least one compound having a proportion of the monomer component 2-acrylamido-2-methylpropanesulphonic acid ("AMPS") of from 5 to 30 mol% as component (b).

**16.** Dry mortar mixture according to Claim 1, **characterized in that** the component (b) contains at least one representative selected from the group consisting of ethylenically unsaturated, water-soluble carboxylic acids and derivatives thereof and/or ethylenically unsaturated sulphonic acid monomers as anionic monomer.

**17.** Dry mortar mixture according to Claim 16, **characterized in that** the ethylenically unsaturated carboxylic acid or the carboxylic anhydride monomer is acrylic acid, methacrylic acid, ethacrylic acid, α-chloroacrylic acid, α-cyanoacrylic acid, β-methacrylic acid (crotonic acid), α-phenylacrylic acid, β-acryloxypropionic acid, sorbic acid, α-chlorosorbic acid, 2'-methylisocrotonic acid, cinnamic acid, p-chlorocinnamic acid, β-stearic acid, itaconic acid, citraconic acid, mesacronic acid, glutaconic acid, aconitic acid, maleic acid, fumaric acid, tricarboxyethylene or maleic anhydride and **in that** the ethylenically unsaturated sulphonic acid monomer is an aliphatic or aromatic vinylsulphonic acid or an acrylic or methacrylic sulphonic acid and preferably a vinylsulphonic acid, allylsulphonic acid, vinyltoluenesulphonic acid or styrenesulphonic acid.

**18.** Dry mortar mixture according to any of Claims 15 to 17, **characterized in that** the cationic monomer is a monomer having a permanent cationic charge and in particular a [3-(acryloylamino)propyl]trimethylammonium salt and/or [3-(methacryloylamino)propyl]-trimethylammonium salt and preferably a halide, sulphate or methosulphate thereof.

**19.** Dry mortar mixture according to any of Claims 1 to 18, **characterized in that** it contains at least one representative of fatty acid derivatives, in particular $C_{1-14}$-alkyl esters and -alkylaryl esters of lauric acid and/or oleic acid, monoglycol and/or diglycol esters of lauric and/or oleic acid, monoesters, diesters and triesters of glycerol with lauric and/or oleic acid, metal salts of fatty acids and particularly preferably zinc stearate and/or sodium oleate as hydrophobicizing agent (c).

**20.** Use of the dry mortar mixture according to any of Claims 1 to 19 as tile adhesive, repair mortar, jointing mortar, render or constituent thereof, as adhesive and/or reinforcing mortar for thermal insulation composite systems ("TICSs").

**21.** Use according to Claim 20, **characterized in that** in applications in connection with repair mortars, jointing mortars, renders or thermal insulation composite systems the dry mortar mixture contains a combination of the components (a) + (b) + (c).

**22.** Use according to Claim 20, **characterized in that** in the case of applications as tile adhesive the dry mortar mixture contains a combination of the components (a) + (b).

**23.** Use according to any of Claims 20 to 22 in exterior applications.

## Revendications

1. Mélange sec de mortier à base d'au moins un liant hydraulique et/ou hydraulique latent, qui présente, à l'état gâché et non durci, des propriétés stables (propriétés stables déterminées selon la norme DIN EN 1308, présentant un étalement < 18 cm, déterminé selon la norme DIN EN 1015-3), **caractérisé en ce qu'**il contient au moins un représentant d'un dispersant (a) choisi dans la série formée par les composés contenant au moins un polymère à peigne ramifié présentant des chaînes latérales polyéther, un produit de condensation de naphtalènesulfonate-formaldéhyde ("BNS") et un produit de condensation de mélaminesulfonate-formaldéhyde ("MFS") en une quantité de 0,01 à 5,0% en poids, par rapport à la composition totale du mélange sec de mortier, l'ensemble des représentants pouvant être présents seuls mais également sous forme de mélanges appropriés dans le mélange sec de mortier proposé, et au moins un composé (b) présentant des propriétés superabsorbantes, qui présente une proportion de composant monomère d'acide 2-acrylamido-2-méthylpropanesulfonique ("AMPS") de 0 à 50% en mole, et/ou le composé (b) est un polymère superabsorbant ("SAP") présentant des propriétés anioniques et/ou cationiques.

2. Mélange sec de mortier selon la revendication 1, **caractérisé en ce qu'**il contient, comme autre composant (c), un agent d'hydrofugation.

3. Mélange sec de mortier selon l'une quelconque des revendications 1 ou 2, **caractérisé en ce qu'**il contient, comme liant hydraulique, au moins un représentant choisi dans la série formée par le ciment, en particulier un ciment Portland de la série CEM I, II, III, IV et V, le ciment blanc, la chaux calcinée ainsi que le ciment d'aluminate, de préférence dans des proportions de 3 à 50% en poids, par rapport à la composition totale du mélange sec de mortier.

4. Mélange sec de mortier selon l'une quelconque des revendications 1 à 3, **caractérisé en ce qu'**il contient, comme liant hydraulique latent, au moins un représentant choisi dans la série formée par les cendres volantes, les cendres de haut-fourneau, le métakaolin, la microsilice, la farine de trass, l'aluminosilicate, le tuf, la phonolithe, les terres de diatomées et le schiste bitumineux, de préférence en des proportions de 5 à 50% en poids, par rapport à la composition totale du mélange sec de mortier.

5. Mélange sec de mortier selon l'une quelconque des revendications 1 à 4, **caractérisé en ce qu'**il contient, comme agrégats, des adjuvants présentant une grosseur moyenne de grain de jusqu'à 5 mm, de préférence entre 0,5 et 3 mm et de manière particulièrement préférée entre 1,0 et 2,0 mm, en particulier en des proportions de 5 à 85% en poids, par rapport à la composition totale du mélange sec de mortier.

6. Mélange sec de mortier selon l'une quelconque des revendications 1 à 5, **caractérisé en ce qu'**il s'agit, pour les agrégats, de sables silicatés, de farines silicatées, de carbonates sous forme de farines de calcaire, de sables de concassage de calcaire, de craie, de dolomite, de magnésite et de mélanges de ceux-ci.

7. Mélange sec de mortier selon l'une quelconque des revendications 1 à 6, **caractérisé en ce qu'**il contient l'agent d'hydrofugation en une quantité de 0,1 à 0,6% en poids, de préférence en une quantité de 0,2 à 0,4% en poids et en particulier de 0,2 à 0,3% en poids ; par rapport à la composition totale du mélange sec de mortier.

8. Mélange sec de mortier selon l'une quelconque des revendications 1 à 7, **caractérisé en ce que** le rapport de quantités (a):(b) dans la combinaison (a) + (b) vaut 1:0,5 à 5.

9. Mélange sec de mortier selon l'une quelconque des revendications 1 à 8, **caractérisé en ce que** le rapport de quantités (a):(b):(c) dans la combinaison (a) + (b) + (c) vaut 1:0, 5-5:2-6.

10. Mélange sec de mortier selon l'une quelconque des revendications 1 à 9, **caractérisé en ce qu'**il contient la combinaison (a) + (c) en des proportions de 0,20 à 0,8% en poids, de préférence de 0,25 à 0,45% en poids et de manière particulièrement préférée de 0,25 à 0,35% en poids, à chaque fois par rapport à la composition totale du mélange sec de mortier.

11. Mélange sec de mortier selon l'une quelconque des revendications 1 à 10, **caractérisé en ce qu'**il contient la combinaison (b) + (c) en des proportions de 0,3 à 1,0% en poids, de préférence de 0,3 à 0,8% en poids et de manière particulièrement préférée de 0,35 à 0,6% en poids, à chaque fois par rapport à la composition totale du mélange sec de mortier.

12. Mélange sec de mortier selon l'une quelconque des revendications 1 à 11, **caractérisé en ce qu'**il contient la

combinaison (a) + (b) + (c) en des proportions de 0,4 à 1,0% en poids, de préférence de 0,4 à 0,8% en poids et de manière particulièrement préférée de 0,5 à 0,7% en poids, à chaque fois par rapport à la composition totale du mélange sec de mortier.

**13.** Mélange sec de mortier selon l'une quelconque des revendications 1 à 12, **caractérisé en ce qu'**il contient, comme dispersant (a), un produit de polycondensation, contenant

(I) au moins une unité structurale présentant un aromatique ou un hétéroaromatique et une chaîne latérale polyéther et
(II) au moins une unité structurale phosphatée, présentant un aromatique ou un hétéroaromatique et
(III) au moins une unité structurale, présentant un aromatique ou un hétéroaromatique,

l'unité structurale (II) et l'unité structurale (III) se distinguant uniquement par le fait que le groupe $OP(OH)_2$ de l'unité structurale (II) dans l'unité structurale (III) est remplacée par H et l'unité structurale (III) étant différente de l'unité structurale (I).

**14.** Mélange sec de mortier selon l'une quelconque des revendications 12 ou 13, **caractérisé en ce qu'**il contient des mélanges des représentants de dispersant mentionnés.

**15.** Mélange sec de mortier selon l'une quelconque des revendications 1 à 14, **caractérisé en ce qu'**il contient, comme composant (b), au moins un composé qui présente une proportion de composant monomère d'acide 2-acrylamido-2-méthylpropanesulfonique ("AMPS") de 5 à 30% en mole.

**16.** Mélange sec de mortier selon la revendication 1, **caractérisé en ce que** le composant (b) contient, comme monomère anionique, au moins un représentant choisi dans la série formée par les acides carboxyliques éthyléniquement insaturés, solubles dans l'eau et leurs dérivés et/ou les monomères d'acide sulfonique éthyléniquement insaturés.

**17.** Mélange sec de mortier selon la revendication 16, **caractérisé en ce qu'**il s'agit, pour l'acide carboxylique éthyléniquement insaturé ou pour le monomère d'anhydride d'acide carboxylique, d'acide acrylique, d'acide méthacrylique, d'acide éthacrylique, d'acide $\alpha$-chloroacrylique, d'acide $\alpha$-cyanoacrylique, d'acide ß-méthacrylique (acide crotonique), d'acide $\alpha$-phénylacrylique, d'acide ß-acryloxypropionique, d'acide sorbique, d'acide $\alpha$-chlorosorbique, d'acide 2'-méthylisocrotonique, d'acide cinnamique, d'acide p-chlorocinnamique, d'acide ß-stéarylique, d'acide itaconique, d'acide citraconique, d'acide mésacronique, d'acide glutaconique, d'acide aconitique, d'acide maléique, d'acide fumarique, de tricarboxyéthylène et d'anhydride de l'acide maléique, et **en ce que** le monomère d'acide sulfonique éthyléniquement insaturé est un acide vinylsulfonique aliphatique ou aromatique ou un acide sulfonique acrylique ou méthacrylique est de préférence un acide vinylsulfonique, allylsulfonique, vinyltoluènesulfonique ou styrènesulfonique.

**18.** Mélange sec de mortier selon l'une quelconque des revendications 15 à 17, **caractérisé en ce qu'**il s'agit, pour le monomère cationique, de monomères présentant des charges cationiques permanentes et en particulier de sels de [3-(acryloylamino)-propyl]-triméthylammonium et/ou de sels de [3-(méthacryloylamino)-propyl]-triméthylammonium et de préférence de leurs halogénures, sulfates et méthosulfates.

**19.** Mélange sec de mortier selon l'une quelconque des revendications 1 à 18, **caractérisé en ce qu'**il contient, comme agent d'hydrofugation (c), au moins un représentant des dérivés d'acide gras, en particulier des esters $C_{1-14}$-alkyliques et $C_{1-14}$-alkylaryliques de l'acide laurique et/ou de l'acide oléique, des esters monoglycoliques et/ou diglycoliques de l'acide laurique et/ou oléique, des esters d'acides gras monovalents, divalents et trivalents du glycérol avec de l'acide laurique et/ou oléique, des sels métalliques d'acides gras et de manière particulièrement préférée le stéarate de zinc et/ou l'oléate de sodium.

**20.** Utilisation du mélange sec de mortier selon l'une quelconque des revendications 1 à 19, comme colle à carreaux, comme mortier de réparation, comme mortier de jointoiement, comme enduit ou comme son constituant, comme mortier-colle et/ou comme mortier d'armature pour des systèmes composites d'isolation thermique (Wärmedämmverbundsysteme - "WDVS").

**21.** Utilisation selon la revendication 20, **caractérisée en ce que** le mélange sec de mortier contient une combinaison des composants (a) + (b) + (c) dans des utilisations associées aux mortiers de réparation, aux mortiers de jointoiement, aux enduits ou aux systèmes composites d'isolation thermique.

**22.** Utilisation selon la revendication 20, **caractérisée en ce que** le mélange sec de mortier contient une combinaison des composants (a) + (b) dans des utilisations comme colle à carreaux.

**23.** Utilisation selon l'une quelconque des revendications 20 à 22 à l'extérieur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004030121 A1
- WO 2006061139 A1
- DE 102006028663 B4
- DE 10323205 A1
- DE 102006028663
- US 2003144386 A
- DE 10202039 A1
- DE 102007027470 A1
- WO 2008151878 A1
- WO 2008151879 A1
- WO 2009074447 A1
- DE 19539250 A1
- DE 102005037777 A1
- WO 2006133933 A2
- EP 0214412 A1
- DE 2007603 C
- DE 19609614 A1
- DE 4411791 A1
- EP 0059353 A1
- DE 19538821 A1
- US 4857610 A


### In der Beschreibung aufgeführte Nicht-Patentliteratur


- **R. BAYER ; H. LUTZ ; DRY MORTARS.** Ullmann's Encyclopedia of Industrial Chemistry. Wiley-VCH, 2003, vol. 11, 83-108
- **F. BUCHHOLZ ; A. GRAHAM.** Modem Superabsorber Technology. John Wiley & Sons Inc, 1989, 55-67